(19)

Europäisches
Patentamt
European
Patent Office
Office européen
des brevets

(11) **EP 4 245 568 A1**

(12) **EUROPEAN PATENT APPLICATION**

(43) Date of publication:
**20.09.2023 Bulletin 2023/38**

(21) Application number: **23150037.2**

(22) Date of filing: **02.01.2023**

(51) International Patent Classification (IPC):
**B60C 3/04** *(2006.01)*     **B60C 5/01** *(2006.01)*
**B60C 11/00** *(2006.01)*     **B60C 13/00** *(2006.01)*

(52) Cooperative Patent Classification (CPC):
**B60C 3/04; B60C 5/01;** B60C 2011/0025;
B60C 2011/0033; B60C 2013/006

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **15.03.2022 JP 2022040058**

(71) Applicant: **Sumitomo Rubber Industries, Ltd.
Kobe-shi, Hyogo 651-0072 (JP)**

(72) Inventor: **MORITA, Koki
Kobe-shi, 651-0072 (JP)**

(74) Representative: **Manitz Finsterwald
Patent- und Rechtsanwaltspartnerschaft mbB
Martin-Greif-Strasse 1
80336 München (DE)**

(54) **TIRE**

(57)     The present invention provides a tire including thermoplastic elastomers and having excellent handling stability. The tire includes a tread and a sidewall each including a thermoplastic elastomer composition,
the tire satisfying the following relationship (1):

$$(1) \quad A \leq 3.0\%,$$

wherein A denotes a displacement in a tire radial direction at an outermost surface of a tread crown when the tire is mounted on a normal rim and then inflated to a predetermined air pressure given below,
a total thickness T (mm) at the tread crown and an outer diameter Dt (mm) of the tire satisfying the following relationship (2):

$$(2) \quad T/Dt \leq 0.034,$$

<Predetermined air pressure>
250 (kPa): for the tire with a virtual volume V of 15000 $cm^3$ or more, or
$0.0152 \times V + 22.553$ (kPa): for the tire with a virtual volume V of less than 15000 $cm^3$,
wherein the virtual volume V ($mm^3$) of the tire is calculated from the outer diameter Dt (mm) of the tire, a cross-sectional width Wt (mm) of the tire, a rim diameter R (mm), and a cross-sectional height H (mm) of the tire using the following formulas:

$$V = \{(Dt/2)^2 - (R/2)^2\} \times \pi \times Wt,$$

and

$$R = Dt - 2H,$$

wherein all of Dt, Wt, and H are determined when the tire is mounted on a normal rim at an internal pressure equal to atmospheric pressure.

EP 4 245 568 A1

FIG.1

**Description**

TECHNICAL FIELD

The present invention relates to tires.

BACKGROUND ART

The main structural component of tires is usually a vulcanized rubber composition, which is difficult to recycle. For example, thermoplastic elastomer-containing tires have been studied to improve the recyclability. Yet, there are few examples of practically used thermoplastic elastomer-containing tires. Challenges for practical use still remain at present.

SUMMARY OF INVENTION

TECHNICAL PROBLEM

The present invention aims to solve the problem and to provide a tire including thermoplastic elastomers and having excellent handling stability.

SOLUTION TO PROBLEM

The present invention relates to a tire, including a tread and a sidewall each including a thermoplastic elastomer composition,

the tire satisfying the following relationship (1):

$$(1) \quad A \leq 3.0\%,$$

wherein A denotes a displacement in a tire radial direction at an outermost surface of a tread crown when the tire is mounted on a normal rim and then inflated to a predetermined air pressure given below,
a total thickness T (mm) at the tread crown and an outer diameter Dt (mm) of the tire satisfying the following relationship (2):

$$(2) \quad T/Dt \leq 0.034,$$

<Predetermined air pressure>

250 (kPa): for the tire with a virtual volume V of 15000 $cm^3$ or more, or
0.0152 × v + 22.553 (kPa): for the tire with a virtual volume V of less than 15000 $cm^3$,
wherein the virtual volume V ($mm^3$) of the tire is calculated from the outer diameter Dt (mm) of the tire, a cross-sectional width Wt (mm) of the tire, a rim diameter R (mm), and a cross-sectional height H (mm) of the tire using the following formulas:

$$V = \{(Dt/2)^2 - (R/2)^2\} \times \pi \times Wt,$$

and

$$R = Dt - 2H,$$

wherein all of Dt, Wt, and H are determined when the tire is mounted on a normal rim at an internal pressure equal to atmospheric pressure.

ADVANTAGEOUS EFFECTS OF INVENTION

The tire of the present invention includes a tread and a sidewall each including a thermoplastic elastomer composition and satisfies the relationships (1) and (2). Thus, the present invention can provide a tire having excellent handling stability.

BRIEF DESCRIPTION OF DRAWINGS

FIG. 1 illustrates a cross-sectional view of a part of a pneumatic tire 2.
FIG. 2 illustrates an enlarged cross-sectional view showing the vicinity of a tread 4 of the tire 2 in FIG. 1.

DESCRIPTION OF EMBODIMENTS

The tire of the present invention includes a tread and a sidewall each including a thermoplastic elastomer composition and satisfies the relationships (1) and (2).
The mechanism of the effect is not clear, but is believed to be as follows.
When the displacement measured at a little high internal pressure applied in practical use is 3.0% or less (relationship (1)), deformation of the tread during rotation can be reduced, thereby reducing heat generation accompanying the deformation. This can suppress the plasticization of thermoplastic elastomer-containing components to obtain good response. Thus, handling stability may be improved.
When the ratio of the outer diameter of the tire to the total thickness of the tread crown is controlled to be not more than the predetermined ratio (relationship (2)), the heat inside the tire is more likely to be released from the tread to thus suppress heat build-up in the tread.
This can suppress the plasticization of the entire tire, thereby obtaining good handling stability.
Accordingly, the tire that includes a tread and a sidewall each including a thermoplastic elastomer composition and also satisfies the relationships (1) and (2) is expected to have excellent handling stability.
The tire solves the problem (aim) involved in achieving excellent handling stability by the inclusion of a tread and a sidewall each including a thermoplastic elastomer composition and the satisfaction of the relationship (1): A ≤ 3.0% and the relationship (2): T/Dt ≤ 0.034. In other words, the relationship (1): A ≤ 3.0% and the relationship (2): T/Dt ≤ 0.034 do not define the problem (aim). The problem herein is to impart excellent handling stability to tires. In order to solve the problem, the tire having a structure that satisfies the parameters has been developed.
The tire satisfies the following relationship (1):

$$(1) \quad A \leq 3.0\%,$$

wherein A denotes a displacement in a tire radial direction at an outermost surface of a tread crown when the tire is mounted on a normal rim and then inflated to a predetermined air pressure given below,

<Predetermined air pressure>

250 (kPa): for the tire with a virtual volume V of 15000 cm$^3$ or more, or
0.0152 × v + 22.553 (kPa): for the tire with a virtual volume V of less than 15000 cm$^3$,
wherein the virtual volume V (mm$^3$) of the tire is calculated from the outer diameter Dt (mm) of the tire, a cross-sectional width Wt (mm) of the tire, a rim diameter R (mm), and a cross-sectional height H (mm) of the tire using the following formulas:

$$V = \{(Dt/2)^2 - (R/2)^2\} \times \pi \times Wt,$$

and

$$R = Dt - 2H,$$

wherein all of Dt, Wt, and H are determined when the tire is mounted on a normal rim at an internal pressure equal to atmospheric pressure.

The displacement A may be appropriately determined depending on the use of the tire and is preferably 1.5% or less, more preferably 1.2% or less, still more preferably 1.0% or less, further still more preferably 0.5% or less. The lower limit is preferably 0.1% or more, more preferably 0.2% or more, still more preferably 0.3% or more. When the displacement A is within the range indicated above, the effect tends to be better obtained.

The displacement A for passenger car tires is preferably 1.5% or less, more preferably 1.0% or less, particularly preferably 0.5% or less. The lower limit is preferably 0.1% or more, more preferably 0.2% or more, still more preferably 0.3% or more. When the displacement A is within the range indicated above, the effect tends to be better obtained.

The displacement A for race car tires (e.g., kart tires) is preferably 2.0% or less, more preferably 1.5% or less, particularly preferably 1.2% or less. The lower limit is preferably 0.1% or more, more preferably 0.2% or more, still more preferably 0.3% or more. When the displacement A is within the range indicated above, the effect tends to be better obtained.

To better obtain the effect, the virtual volume V of the tire preferably satisfies the following relationship: $V \geq 4000 \ cm^3$.

The virtual volume V may be appropriately determined depending on the use of the tire and is preferably 5000 $cm^3$ or more, more preferably 5108 $cm^3$ or more, still more preferably 10000 $cm^3$ or more, further still more preferably 20000 $cm^3$ or more, even further still more preferably 37698 $cm^3$ or more. The upper limit is preferably 450000 $cm^3$ or less, more preferably 42000 $cm^3$ or less, still more preferably 40000 $cm^3$ or less. When the virtual volume V is within the range indicated above, the effect tends to be better obtained.

The virtual volume V for passenger car tires is preferably 20000 $cm^3$ or more, more preferably 30000 $cm^3$ or more, still more preferably 32000 $cm^3$ or more, particularly preferably 37698 $cm^3$ or more. The upper limit is preferably 450000 $cm^3$ or less, more preferably 42000 $cm^3$ or less, still more preferably 40000 $cm^3$ or less. When the virtual volume V is within the range indicated above, the effect tends to be better obtained.

The virtual volume V for race car tires (e.g., kart tires) is preferably 4500 $cm^3$ or more, more preferably 4800 $cm^3$ or more, still more preferably 5000 $cm^3$ or more, particularly preferably 5108 $cm^3$ or more. The upper limit is preferably 10000 $cm^3$ or less, more preferably 7000 $cm^3$ or less, still more preferably 6000 $cm^3$ or less. When the virtual volume V is within the range indicated above, the effect tends to be better obtained.

To better obtain the effect, the outer diameter Dt of the tire preferably satisfies the following relationship: $Dt \geq 200 \ mm$.

The outer diameter Dt may be appropriately determined depending on the use of the tire and is preferably 250 mm or more, more preferably 255 mm or more, still more preferably 350 mm or more, further still more preferably 450 mm or more, particularly preferably 550 mm or more, most preferably 632 mm or more. The upper limit is preferably 800 mm or less, more preferably 700 mm or less, still more preferably 670 mm or less, particularly preferably 650 mm or less. When the outer diameter Dt is within the range indicated above, the effect tends to be better obtained.

The outer diameter Dt for passenger car tires is preferably 550 mm or more, more preferably 600 mm or more, still more preferably 620 mm or more, particularly preferably 630 mm or more, most preferably 632 mm or more. The upper limit is preferably 750 mm or less, more preferably 700 mm or less, still more preferably 680 mm or less, particularly preferably 670 mm or less. When the outer diameter Dt is within the range indicated above, the effect tends to be better obtained.

The outer diameter Dt for race car tires (e.g., kart tires) is preferably 220 mm or more, more preferably 230 mm or more, still more preferably 240 mm or more, particularly preferably 250 mm or more, most preferably 255 mm or more. The upper limit is preferably 350 mm or less, more preferably 300 mm or less, still more preferably 280 mm or less, particularly preferably 270 mm or less. When the outer diameter Dt is within the range indicated above, the effect tends to be better obtained.

To better obtain the effect, the cross-sectional width Wt of the tire preferably satisfies the following relationship:

$$Wt \geq 100 \ mm.$$

The cross-sectional width Wt may be appropriately determined depending on the use of the tire and is preferably 120 mm or more, more preferably 125 mm or more, still more preferably 130 mm or more, further still more preferably 133 mm or more, even further still more preferably 205 mm or more. The upper limit is preferably 250 mm or less, more preferably 230 mm or less, still more preferably 210 mm or less. When the cross-sectional width Wt is within the range indicated above, the effect tends to be better obtained.

The cross-sectional width Wt for passenger car tires is preferably 150 mm or more, more preferably 180 mm or more, still more preferably 200 mm or more, particularly preferably 205 mm or more. The upper limit is preferably 250 mm or less, more preferably 230 mm or less, still more preferably 210 mm or less. When the cross-sectional width Wt is within the range indicated above, the effect tends to be better obtained.

The cross-sectional width Wt for race car tires (e.g., kart tires) is preferably 120 mm or more, more preferably 125 mm or more, still more preferably 130 mm or more, particularly preferably 133 mm or more. The upper limit is preferably 200 mm or less, more preferably 170 mm or less, still more preferably 150 mm or less. When the cross-sectional width Wt is within the range indicated above, the effect tends to be better obtained.

To better obtain the effect, the cross-sectional height H of the tire preferably satisfies the following relationship:

$$H \geq 50 \text{ mm.}$$

The cross-sectional height H may be appropriately determined depending on the use of the tire and is preferably 64 mm or more, more preferably 80 mm or more, still more preferably 90 mm or more, further still more preferably 100 mm or more, particularly preferably 110 mm or more, most preferably 113 of more. The upper limit is preferably 180 mm or less, more preferably 160 mm or less, still more preferably 140 mm or less, particularly preferably 130 mm or less. When the cross-sectional height H is within the range indicated above, the effect tends to be better obtained.

The cross-sectional height H for passenger car tires is preferably 90 mm or more, more preferably 100 mm or more, still more preferably 105 mm or more, particularly preferably 110 mm or more, most preferably 113 mm or more. The upper limit is preferably 180 mm or less, more preferably 160 mm or less, still more preferably 140 mm or less, particularly preferably 130 mm or less. When the cross-sectional height H is within the range indicated above, the effect tends to be better obtained.

The cross-sectional height H for race car tires (e.g., kart tires) is preferably 55 mm or more, more preferably 57 mm or more, still more preferably 60 mm or more, most preferably 64 mm or more. The upper limit is preferably 90 mm or less, more preferably 80 mm or less, still more preferably 70 mm or less. When the cross-sectional height H is within the range indicated above, the effect tends to be better obtained.

To better obtain the effect, the cross-sectional width Wt of the tire and the cross-sectional height H of the tire preferably satisfy the following relationship: H/Wt × 100 ≥ 35%.

The lower limit of the value of "H/Wt × 100" is preferably 35% or higher, more preferably 45% or higher, still more preferably 48% or higher, particularly preferably 50% or higher, most preferably 55% or higher. The upper limit is preferably 70% or less, more preferably 650 or less, still more preferably 60% or less. When the value is within the range indicated above, the effect tends to be better obtained.

In the present invention, the displacement A is a displacement in a tire radial direction at an outermost surface of a tread crown when the tire is mounted on a normal rim and then inflated to a predetermined air pressure. Specifically, the displacement A is calculated using the following formula:

$$A \text{ (\%)} = [\{(\text{tire outer diameter in a tire radial direction at an outermost surface of a tread crown when the tire is mounted on a normal rim and then inflated to the predetermined air pressure}) - (\text{tire outer diameter in a tire radial direction at an outermost surface of a tread crown when the tire is mounted on a normal rim at an internal pressure equal to atmospheric pressure})\}/(\text{tire outer diameter in a tire radial direction at an outermost surface of a tread crown when the tire is mounted on a normal rim at an internal pressure equal to atmospheric pressure})] \times 100.$$

In the present invention, the term "tread crown" refers to a portion located at the equatorial plane of the tire in a cross section of the tire.

The term "outermost surface of a tread crown" refers to a tread surface at the tread crown (tread surface on the equator of the tire). When the tread crown has a circumferential groove, the tread surface refers to an intersection of the equatorial plane of the tire and a straight line connecting the edges of the circumferential groove which are on the outermost surface of the tire.

In the present invention, the term "normal rim" refers to a rim specified for each tire by the standards in a standard system including standards according to which tires are provided, and may be, for example, "standard rim" in JATMA, "design rim" in TRA, or "measuring rim" in ETRTO.

As described earlier, the term "predetermined air pressure" is 250 kPa for tires with a virtual volume V of 15000 cm$^3$ or more, while it is a value (kPa) calculated by "0.0152 × v + 22.553" for tires with a virtual volume V of less than 15000 cm$^3$.

As described earlier, the term "virtual volume V of the tire" refers to a value calculated using the formula "V = {(Dt/2)$^2$ - (R/2)$^2$} × π × Wt".

As described earlier, the term "outer diameter Dt of the tire" refers to an outer diameter of the tire when the tire is mounted on a normal rim at an internal pressure equal to atmospheric pressure.

The term "cross-sectional width Wt of the tire" refers to a width of the tire mounted on a normal rim at an internal pressure equal to atmospheric pressure, as determined by excluding the widths of patterns, letters, and the like on the sides of the tire from the linear distance between the sidewalls (the total width of the tire) including all the patterns, letters, and the like on the sides of the tire.

The term "cross-sectional height H of the tire" refers to a length in the tire radial direction from a position where the tire has the smallest outer diameter (position on an edge in the tire radial direction) to a position where the tire has the largest outer diameter (position on the equator of the tire) when the tire is mounted on a normal rim at an internal pressure equal to atmospheric pressure.

The tire has a total thickness T (mm) at the tread crown and an outer diameter Dt (mm) of the tire which satisfy the following relationship (2):

$$(2) \quad T/Dt \leq 0.034.$$

The ratio "T/Dt" may be appropriately determined depending on the use of the tire and is preferably 0.030 or lower, more preferably 0.025 or lower, still more preferably 0.020 or lower, particularly preferably 0.016 or lower. The lower limit is preferably 0.005 or higher, more preferably 0.010 or higher, still more preferably 0.012 or higher. When the ratio is within the range indicated above, the effect tends to be better obtained.

The ratio "T/Dt" for passenger car tires is preferably 0.030 or lower, more preferably 0.025 or lower, still more preferably 0.020 or lower, particularly preferably 0.016 or lower. The lower limit is preferably 0.005 or higher, more preferably 0.008 or higher, still more preferably 0.010 or higher. When the ratio is within the range indicated above, the effect tends to be better obtained.

The ratio "T/Dt" for race car tires (e.g., kart tires) is preferably 0.030 or lower, more preferably 0.025 or lower, still more preferably 0.022 or lower, particularly preferably 0.020 or lower. The lower limit is preferably 0.005 or higher, more preferably 0.010 or higher, still more preferably 0.013 or higher. When the ratio is within the range indicated above, the effect tends to be better obtained.

To better obtain the effect, the tire preferably has a total thickness T (mm) at the tread crown satisfying the following relationship:

$$T \leq 15.0 \quad mm.$$

The total thickness T may be appropriately determined depending on the use of the tire and is preferably 10.0 mm or less, more preferably 8.0 mm or less, still more preferably 6.0 mm or less, particularly preferably 5.0 mm or less. The lower limit is preferably 1.0 mm or more, more preferably 2.0 mm or more, still more preferably 2.5 mm or more, particularly preferably 3.0 mm or more. When the total thickness T is within the range indicated above, the effect tends to be better obtained.

The total thickness T for passenger car tires is preferably 12.0 mm or less, more preferably 11.0 mm or less, still more preferably 10.0 mm or less. The lower limit is preferably 5.0 mm or more, more preferably 7.0 mm or more, still more preferably 8.0 mm or more. When the total thickness T is within the range indicated above, the effect tends to be better obtained.

The total thickness T for race car tires (e.g., kart tires) is preferably 8.0 mm or less, more preferably 7.0 mm or less, still more preferably 5.0 mm or less. The lower limit is preferably 1.0 mm or more, more preferably 2.0 mm or more, still more preferably 3.0 mm or more. When the total thickness T is within the range indicated above, the effect tends to be better obtained.

In the present invention, the term "total thickness T at a tread crown" refers to a length from the tread surface at the equatorial plane to the inner surface of the tread in a cross section taken along a plane including the axis of the tire. When the tread crown has components (e.g., reinforcing layer, support) not including a thermoplastic elastomer composition, the total thickness T refers to a length from the surface at the equatorial plane of the tread including the components to the inner surface of the tread. When the tread has a groove at the equatorial plane of the tire, the total thickness T refers to a linear length from an intersection of the equatorial plane and a straight line connecting the edges of the groove which are on the radially outermost surface of the tire.

The outer diameter Dt of the tire is as described above.

The tire will be described in detail below based on an exemplary preferred embodiment with appropriate reference to the drawings. The embodiment is one example and is not intended to restrict the present invention.

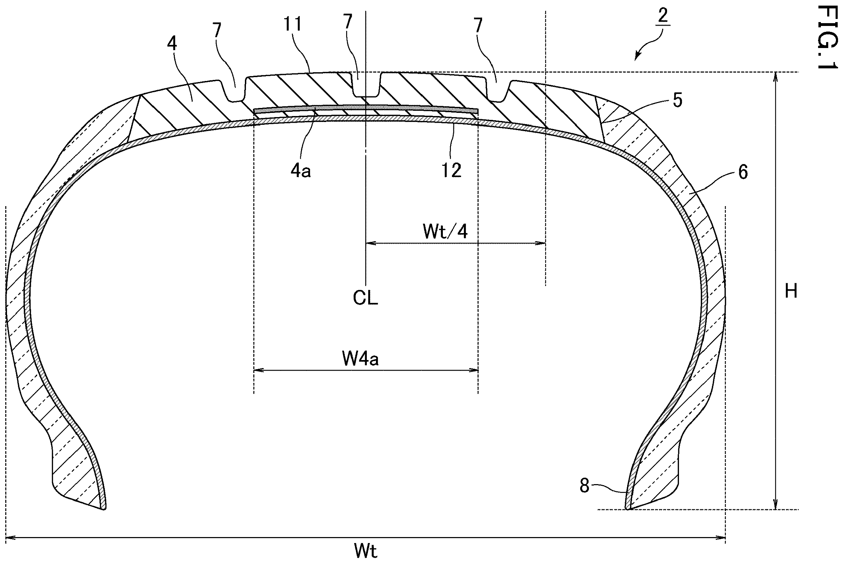

FIG. 1 shows a pneumatic tire 2. In FIG. 1, the vertical direction corresponds to the radial direction of the tire 2, the horizontal direction corresponds to the axial direction of the tire 2, and the direction perpendicular to the paper corresponds to the circumferential direction of the tire 2. In Fig. 1, the dash-dot-dash line CL represents the equatorial plane of the tire 2. The shape of the tire 2 is symmetrical about the equatorial plane, except for the tread pattern.

The tire 2 includes a tread 4 and a pair of sidewalls 6. The tire 2 is a tubeless tire. The tire 2 is usable for passenger cars. The tire 2 may further include a base tread, or another layer, such as an elastomer layer, a rubber layer, or a support layer, provided with a function of other components (e.g., clinches, beads, carcasses, belts, bands, inner liners, chafers).

The tread 4 has a radially outwardly convex shape. The tread 4 has a tread surface 11 that will contact the road. The tread 4 may consist of a single thermoplastic elastomer composition. Alternatively, the tread 4 may be a stack of multiple thermoplastic elastomer compositions or a stack of vulcanized rubber compositions and thermoplastic elastomer compositions. When the tread 4 is a stack of multiple compositions, the compositions are stacked in the tire radial direction and then the function of, for example, a base tread is imparted to each composition layer as in passenger car tires, or the compositions are connected in the tire width direction. This may improve the balance of performances in straight driving and turning.

In the tire 2 of FIG. 1, each sidewall 6 is connected by a joint 5 to an end of the tread 4 and extends about inwardly in the radial direction. Each sidewall 6 may consist of a single thermoplastic elastomer composition. Alternatively, the sidewall 6 may be a stack of multiple thermoplastic elastomer compositions or a stack of vulcanized rubber compositions and thermoplastic elastomer compositions. The sidewall 6 is connected to the tread 4 in the tire axis direction. The sidewall 6 may be connected to the tread 4 such that the tread 4 covers the end portion of the sidewall 6 outwardly in the tire radial direction or such that the sidewall 6 covers the end portion of the tread 4 outwardly in the tire radial direction. From the standpoint of the engagement with a rim, handling stability, and the like, a component corresponding to a chafer or a bead-reinforcing layer may be provided at a bead located inwardly in the radial direction of the sidewall 6. The sidewall 6 may have a stack structure consisting of different compositions between the tire surface and the inner surface.

The tread 4 and the sidewalls 6 in the tire 1 each include a thermoplastic elastomer composition. The term "thermoplastic elastomer composition" refers to a composition containing a thermoplastic elastomer.

To better obtain the effect, the thermoplastic elastomer composition in a tread 4 preferably has a complex modulus of elasticity Et* satisfying the following relationship:

$$Et^* \geq 5.0 \text{ MPa},$$

wherein Et* denotes a complex modulus of elasticity measured at a temperature of 30°C, an initial strain of 10%, a dynamic strain of 1%, and a frequency of 10 Hz in a tensile mode.

The lower limit of Et* is preferably 6.0 MPa or more, more preferably 6.2 MPa or more, still more preferably 6.5 MPa or more, further still more preferably 7.0 MPa or more, even further still more preferably 7.9 MPa or more. The upper limit is preferably 15.0 MPa or less, more preferably 13.4 MPa or less, still more preferably 13.0 MPa or less, further still more preferably 11.0 MPa or less, particularly preferably 10.0 MPa or less. When the Et* is within the range indicated above, the effect is suitably obtained.

The above effect is obtained when the Et* is controlled in a predetermined range, in particular, controlled to be a value satisfying "5.0 MPa ≤ Et* ≤ 13.0 MPa". The mechanism of the effect is not clear, but is believed to be as follows. A tread having Et* within a predetermined range may be less likely to deform due to the internal pressure and may have good response, thereby improving handling stability.

To better obtain the effect, the thermoplastic elastomer composition in a sidewall 6 preferably has a complex modulus of elasticity Es* satisfying the following relationship:

$$Es^* \geq 13.0 \text{ MPa},$$

wherein Es* denotes a complex modulus of elasticity measured at a temperature of 30°C, an initial strain of 10%, a dynamic strain of 1%, and a frequency of 10 Hz in a tensile mode.

The lower limit of Es* is preferably 14.8 MPa or more, more preferably 25.0 MPa or more, still more preferably 35.0 MPa or more, further still more preferably 40.0 MPa or more, particularly preferably 42.0 MPa or more, most preferably 42.7 MPa or more. The upper limit is preferably 130.0 MPa or less, more preferably 125.0 MPa or less, still more preferably 100.0 MPa or less, further still more preferably 80.0 MPa or less, particularly preferably 70.0 MPa or less. When the Es* is within the range indicated above, the effect is suitably obtained.

The above effect is obtained when the Es* is controlled in a predetermined range, in particular, controlled to be a value satisfying "13.0 MPa ≤ Es* ≤ 80.0 MPa". The mechanism of the effect is not clear, but is believed to be as follows. A sidewall having Es* within a predetermined range may have good response, thereby improving handling stability.

To better obtain the effect, the complex modulus of elasticity Et* (MPa) of the thermoplastic elastomer composition in the tread 4 and the complex modulus of elasticity Es* (MPa) of the thermoplastic elastomer composition in the sidewall 6 preferably satisfy the following relationship:

$$Es*/Et* \leq 10.0,$$

wherein Et* denotes a complex modulus of elasticity measured at a temperature of 30°C, an initial strain of 10%, a dynamic strain of 1%, and a frequency of 10 Hz in a tensile mode, and Es* denotes a complex modulus of elasticity measured at a temperature of 30°C, an initial strain of 10%, a dynamic strain of 1%, and a frequency of 10 Hz in a tensile mode.

The upper limit of the ratio "Es*/Et*" is preferably 9.3 or lower, more preferably 7.0 or lower, still more preferably 6.1 or lower, further still more preferably 2.4 or lower, particularly preferably 2.1 or lower, most preferably 1.9 or lower. The lower limit is preferably 0.5 or higher, more preferably 1.0 or higher, still more preferably 1.3 or higher. When the ratio is within the range indicated above, the effect is suitably obtained.

The above effect is obtained when the ratio "Es*/Et*" is controlled in a predetermined range. The mechanism of the effect is not clear, but is believed to be as follows. When the modulus of elasticity of the sidewall is sufficiently high relative to the modulus of elasticity of the tread, the sidewall may not be excessively deformed by friction generated in the tread. Thus, force is transmitted to the car body, and the car can easily change the direction to exhibit good response. Accordingly, handling stability may be improved.

Herein, the complex modulus of elasticity E* means the E* of a thermoplastic elastomer composition in a molded tire. In the case of a rubber composition, the E* corresponds to the elastic modulus of the rubber composition after it is vulcanized. Specifically, it means the E* of a thermoplastic elastomer composition measured by the method described in EXAMPLES.

Herein, the E* of a thermoplastic elastomer composition refers to a complex modulus of elasticity measured at a temperature of 30°C, an initial strain of 10%, a dynamic strain of 1%, and a frequency of 10 Hz in a tensile mode. A measurement sample having a width of 4 mm, a length of 20 mm, and a thickness of 1 mm is collected from each component of a produced tire, with the longitudinal direction of the sample corresponding to the tire circumferential direction.

The E* of the thermoplastic elastomer composition may be controlled by the types and amounts of chemicals (in particular, thermoplastic elastomers, fillers, or softeners such as oils) in the elastomer composition. For example, the E* tends to be increased by using a polyether-based thermoplastic polyurethane elastomer, while the E* tends to be decreased by using a polyester-based thermoplastic polyurethane elastomer. The E* tends to be increased by reducing the amount of softeners or by increasing the amount of fillers.

Examples of thermoplastic elastomers usable in the thermoplastic elastomer composition include olefin-based thermoplastic elastomers, styrene-based thermoplastic elastomers (e.g., styrene-isobutylene-styrene block copolymers (SIBS), styrene-isoprene-styrene block copolymers (SIS), styrene-isobutylene block copolymers (SIB), styrene-butadiene-styrene block copolymers (SBS), styrene-ethylene/butene-styrene block copolymers (SEBS), styrene-ethylene/propylene-styrene block copolymers (SEPS), styrene-ethylene/ethylene/propylene-styrene block copolymers (SEEPS), and styrene-butadiene/butylene-styrene block copolymers (SBBS)), vinyl chloride-based thermoplastic elastomers, urethane-based thermoplastic elastomers, polyamide-based thermoplastic elastomers, polyester-based thermoplastic elastomers, and fluorinated thermoplastic elastomers. Each of these may be used alone, or two or more of these may be used in combination. Urethane-based thermoplastic elastomers (thermoplastic polyurethane elastomers (TPU)) are preferred among these.

Examples of the thermoplastic polyurethane elastomers (urethane-based thermoplastic elastomers) include those formed from isocyanates and polyols and optionally chain extenders.

The isocyanates for forming the thermoplastic polyurethane elastomers may be any isocyanate compound having two or more isocyanate groups. Examples include aromatic isocyanates such as 2,4-toluene diisocyanate, 2,6-toluene diisocyanate, mixtures of 2,4-toluene diisocyanate and 2,6-toluene diisocyanate (TDI), 4,4'-diphenylmethane diisocyanate (MDI), 1,5-naphthylene diisocyanate (NDI), 3,3'-bitolylene-4,4'-diisocyanate (TODI), xylylene diisocyanate (XDI), tetramethylxylylene diisocyanate (TMXDI), para-phenylene diisocyanate (PPDI), and 4,4'-methylene-bis(phenylisocyanate); and alicyclic or aliphatic isocyanates such as 4,4'-dicyclohexylmethane diisocyanate ($H_{12}$MDI), hydrogenated xylylene diisocyanate ($H_6$XDI), hexamethylene diisocyanate (HDI), and isophorone diisocyanate (IPDI). Each of these may be used alone, or two or more of these may be used in combination.

Examples of the polyols (high-molecular-weight polyols) for forming the thermoplastic polyurethane elastomers include: polyether polyols such as polyoxyethylene glycol (PEG), polyoxypropylene glycol (PPG), and polyoxytetramethylene glycol (PTMG); condensed polyester polyols such as polyethylene adipate (PEA), polybutylene adipate (PBA), and polyhexamethylene adipate (PHMA); lactone-based polyester polyols such as poly-ε-caprolactone (PCL); polycarbonate polyols such as polyhexamethylene carbonate; and acrylic polyols. From the standpoint of ride quality after long-term storage, polyether polyols or polycarbonate polyols are preferred among these. Each of these may be used alone, or two or more of these may be used in combination.

Examples of the chain extenders include low-molecular-weight polyols, polyamines, and amino alcohols. From the standpoint of ride quality after long-term storage and the like, low-molecular-weight polyols are preferred among these.

Examples of the low-molecular-weight polyols include: triols such as glycerol, trimethylolethane, trimethylolpropane, and hexane triol; tetraols such as pentaerythritol; and hexaols such as sorbitol. Examples also include diols such as ethylene glycol, diethylene glycol, triethylene glycol, 1,3-propanediol, 1,3-butanediol, 1,4-butanediol, neopentyl glycol, 1,6-hexanediol, 1,8-octanediol, aniline-based diols, and bisphenol A-based diols. Each of these may be used alone, or two or more of these may be used in combination.

Examples of the polyamines include: triamines such as diethylenetriamine and dipropylenetriamine; and diamines including aliphatic diamines such as ethylenediamine and hexamethylenediamine, alicyclic diamines such as isophorone diamine and piperazine, and aromatic diamines. The aromatic diamines may be, for example, monocyclic aromatic diamines in which two amino groups are bound to one aromatic ring, or polycyclic aromatic diamines having two aminophenyl groups in which at least one amino group is bound to one aromatic ring. Examples of the monocyclic aromatic diamines include those in which the amino group is directly bound to the aromatic ring, such as phenylenediamine, toluene diamine, diethyltoluene diamine, and dimethylthiotoluene diamine; and those in which the amino group is bound to the aromatic ring via a lower alkylene group, such as xylylenediamine. Examples of the polycyclic aromatic diamines include diaminodiphenyl alkanes (e.g., 4,4'-diaminodiphenylmethane and derivatives thereof). Each of these may be used alone, or two or more of these may be used in combination.

The thermoplastic polyurethane elastomers may be synthesized by known methods, including a one-shot method and a prepolymer method. The one-shot method involves reacting isocyanates with polyols and other materials all at once to obtain a high molecular weight. The prepolymer method involves reacting isocyanates with polyols and other materials in multiple steps to obtain a high molecular weight, and may include, for example, temporarily synthesizing a low-molecular-weight urethane prepolymer and subsequently reacting the prepolymer with the above-mentioned chain extenders to obtain a high molecular weight.

The polyurethanes may be synthesized using known catalysts. Examples of the catalysts include: monoamines such as triethylamine and N,N-dimethylcyclohexylamine; polyamines such as N,N,N',N'-tetramethylethylenediamine; cyclic diamines such as 1,8-diazabicyclo[5.4.0]-7-undecene (DBU) and triethylenediamine; and tin catalysts such as dibutyltin dilaurate and dibutyltin diacetate. Each of these may be used alone, or two or more of these may be used in combination.

The proportions of the isocyanates and the polyols in the polyurethanes are not limited, but the ratio of the isocyanate groups of the isocyanates to the hydroxy groups of the polyols, NCO/OH ratio (molar ratio), is preferably 0.5 or higher, more preferably 0.7 or higher, still more preferably 0.8 or higher. When the ratio is lower than the lower limit, the isocyanate content is so small that the mechanical strength of the urethanes tends to decrease. The NCO/OH ratio (molar ratio) is preferably 2.5 or lower, more preferably 2.2 or lower, still more preferably 2.0 or lower. When the ratio is higher than the upper limit, the isocyanate content may be excessive and lead to more absorption of moisture. Thus, the urethanes may have low mechanical strength.

With regard to the thermoplastic elastomer composition in the tread 4 and the thermoplastic elastomer composition in a sidewall 6, the amount of thermoplastic elastomers based on 100% by mass of elastomer components in each elastomer composition is not limited, but it is preferably 5% by mass or more, more preferably 10% by mass or more, still more preferably 20% by mass or more. The upper limit is not limited and may be 100% by mass. When the amount is within the range indicated above, the effect tends to be better obtained.

The elastomer composition may contain additional elastomer components other than the above-mentioned thermoplastic elastomers. The additional elastomer components may include diene-based rubbers. Examples of the diene-based rubbers include isoprene-based rubbers, polybutadiene rubbers (BR), styrene-butadiene rubbers (SBR), styrene-isoprene-butadiene rubbers (SIBR), ethylenepropylene-diene rubbers (EPDM), chloroprene rubbers (CR), and acrylonitrile-butadiene rubbers (NBR). Other examples include butyl-based rubbers and fluororubbers. Each of these may be used alone, or two or more of these may be used in combination. Preferred among the additional elastomers are SBR, BR, and isoprene-based rubbers because they are suitable in tire applications.

The diene-based rubbers may be either unmodified diene-based rubbers or modified diene-based rubbers.

The modified diene-based rubbers may be any diene-based rubber having a functional group interactive with a filler such as silica. Examples include a chain end-modified diene-based rubber obtained by modifying at least one chain end of a diene-based rubber with a compound (modifier) having the functional group (i.e., a chain end-modified diene-based rubber terminated with the functional group); a backbone-modified diene-based rubber having the functional group in the backbone; a backbone- and chain end-modified diene-based rubber having the functional group in both the backbone and chain end (e.g., a backbone- and chain end-modified diene-based rubber in which the backbone has the functional group and at least one chain end is modified with the modifier); and a chain end-modified diene-based rubber including a hydroxy or epoxy group that has been introduced by modification (coupling) with a polyfunctional compound having two or more epoxy groups in the molecule.

Examples of the functional group include amino, amide, silyl, alkoxysilyl, isocyanate, imino, imidazole, urea, ether, carbonyl, oxycarbonyl, mercapto, sulfide, disulfide, sulfonyl, sulfinyl, thiocarbonyl, ammonium, imide, hydrazo, azo, diazo, carboxyl, nitrile, pyridyl, alkoxy, hydroxy, oxy, and epoxy groups. These functional groups may be substituted. Preferred among these are amino groups (preferably amino groups whose hydrogen atom is replaced with a C1-C6 alkyl group), alkoxy groups (preferably C1-C6 alkoxy groups), and alkoxysilyl groups (preferably C1-C6 alkoxysilyl groups).

Any SBR may be used, and examples include emulsion-polymerized styrene-butadiene rubbers (E-SBR) and solution-polymerized styrene-butadiene rubbers (S-SBR). Each of these may be used alone, or two or more of these may be used in combination.

The styrene content of the SBR is preferably 5% by mass or higher, more preferably 10% by mass or higher, still more preferably 15% by mass or higher. The styrene content is preferably 60% by mass or lower, more preferably 40% by mass or lower, still more preferably 30% by mass or lower. When the styrene content is within the range indicated above, the advantageous effect can be more suitably achieved.

Herein, the styrene content of the SBR is determined by $^1$H-NMR analysis.

SBR products manufactured or sold by Sumitomo Chemical Co., Ltd., JSR Corporation, Asahi Kasei Corporation, Zeon Corporation, etc. may be used as the SBR.

The SBR may be either unmodified SBR or modified SBR. Examples of the modified SBR include those into which functional groups as listed for the modified diene-based rubbers are introduced.

From the standpoint of ride quality after long-term storage and the like, the amount of the SBR, if present, based on 100% by mass of elastomer components in the elastomer composition in the tread 4 and the elastomer composition in the sidewall 6 is preferably 10% by mass or more, more preferably 20% by mass or more. The upper limit is preferably 90% by mass or less, more preferably 80% by mass or less.

Any BR may be used, and examples include high-cis BR having a high cis content, BR containing syndiotactic polybutadiene crystals, and BR synthesized using rare earth catalysts (rare earth-catalyzed BR). Each of these may be used alone, or two or more of these may be used in combination. In particular, high-cis BR having a cis content of 90% by mass or higher is preferred to improve abrasion resistance.

The BR may be either unmodified BR or modified BR. Examples of the modified BR include those into which functional groups as listed for the modified diene-based rubbers are introduced.

From the standpoint of abrasion resistance and the like, the amount of the BR, if present, based on 100% by mass of elastomer components in the elastomer composition in the tread 4 and the elastomer composition in the sidewall 6 is preferably 10% by mass or more, more preferably 20% by mass or more. The upper limit is preferably 90% by mass or less, more preferably 80% by mass or less.

Commercial products available from Ube Industries, Ltd., JSR Corporation, Asahi Kasei Corporation, Zeon Corporation, etc. may be used as the BR.

Examples of the isoprene-based rubbers include natural rubbers (NR), polyisoprene rubbers (IR), refined NR, modified NR, and modified IR. Examples of the NR include those commonly used in the rubber industry such as SIR20, RSS#3, and TSR20. Any IR may be used, and examples include those commonly used in the rubber industry such as IR2200. Examples of the refined NR include deproteinized natural rubbers (DPNR) and highly purified natural rubbers (UPNR). Examples of the modified NR include epoxidized natural rubbers (ENR), hydrogenated natural rubbers (HNR), and grafted natural rubbers. Examples of the modified IR include epoxidized polyisoprene rubbers, hydrogenated polyisoprene rubbers, and grafted polyisoprene rubbers. Each of these may be used alone, or two or more of these may be used in combination.

From the standpoint of fuel economy and the like, the amount of the isoprene-based rubbers, if present, based on 100% by mass of elastomer components in the elastomer composition in the tread 4 and the elastomer composition in the sidewall 6 is preferably 10% by mass or more, more preferably 20% by mass or more. The upper limit is preferably 90% by mass or less, more preferably 80% by mass or less.

To better obtain the effect, the thermoplastic elastomer composition in the tread 4 and the thermoplastic elastomer composition in the sidewall 6 each preferably contain a crosslinking agent. The crosslinking agent may be an appropriate known crosslinking agent and may suitably be a crosslinking agent capable of partly linking the thermoplastic elastomers to form a network. When such a crosslinking agent is used, the crosslinking state of the thermoplastic elastomers may not be controlled during the synthesis. Instead, the crosslinking state may be changed while suppressing a change in the hardness by adding the crosslinking agent later, and then performing kneading and heating using a twin-screw extruder.

To better obtain the effect, the above-mentioned isocyanates may suitably be used as the crosslinking agent. Preferred among the isocyanates are 4,4'-diphenylmethane diisocyanate (MDI) and methylenebis(4,1-phenylene)diisocyanate, with MDI being more preferred. Each of these may be used alone, or two or more of these may be used in combination.

When an isocyanate is used as a crosslinking agent and the thermoplastic polyurethane elastomer is used as a thermoplastic elastomer, the thermoplastic elastomer composition contains the isocyanate as a crosslinking agent that is different from the isocyanate in the thermoplastic polyurethane elastomer. In other words, the thermoplastic elastomer composition contains a crosslinked thermoplastic polyurethane elastomer and an isocyanate (different crosslinking agent).

The amount of the crosslinking agent (the amount of the different crosslinking agent that is different from those in thermoplastic elastomers) in the thermoplastic elastomer composition in the tread 4 and that in the thermoplastic elastomer composition in the sidewall 6 per 100 parts by mass of elastomer components are each preferably 1.0 parts by mass or more, more preferably 2.0 parts by mass or more, still more preferably 2.5 parts by mass or more, particularly preferably 3.0 parts by mass or more. The upper limit is preferably 15.0 parts by mass or less, more preferably 10.0 parts by mass or less, still more preferably 7.0 parts by mass or less, particularly preferably 5.0 parts by mass or less. When the amount is within the range indicated above, good ride quality after long-term storage and the like tend to be obtained.

The amount of the isocyanate as a crosslinking agent (the amount of isocyanate that is different from the isocyanate in thermoplastic elastomers) in the thermoplastic elastomer composition in the tread 4 and that in the thermoplastic elastomer composition in the sidewall 6 per 100 parts by mass of elastomer components are each preferably 1.0 parts by mass or more, more preferably 2.0 parts by mass or more, still more preferably 2.5 parts by mass or more, particularly preferably 3.0 parts by mass or more. The upper limit is preferably 15.0 parts by mass or less, more preferably 10.0 parts by mass or less, still more preferably 7.0 parts by mass or less, particularly preferably 5.0 parts by mass or less. When the amount is within the range indicated above, the effect tends to be better obtained.

The amount of MDI as a crosslinking agent (the amount of MDI that is different from the MDI in thermoplastic elastomers) in the thermoplastic elastomer composition in the tread 4 and that in the thermoplastic elastomer composition in the sidewall 6 per 100 parts by mass of elastomer components are each preferably 1.0 parts by mass or more, more preferably 2.0 parts by mass or more, still more preferably 2.5 parts by mass or more, particularly preferably 3.0 parts by mass or more. The upper limit is preferably 15.0 parts by mass or less, more preferably 10.0 parts by mass or less, still more preferably 7.0 parts by mass or less, particularly preferably 5.0 parts by mass or less. When the amount is within the range indicated above, the effect tends to be better obtained.

The elastomer composition in the tread 4 and the elastomer composition in the sidewall 6 may each contain any appropriate filler such as fibers. Even fibrous fillers, which are generally difficult to disperse in thermoplastic elastomers, are usable. For example, even poorly dispersible fillers, such as microfibrillated plant fibers, short fiber celluloses, and gel compounds, may be suitably used.

To obtain good reinforcement, the microfibrillated plant fibers are preferably cellulose microfibrils. Any cellulose microfibril derived from naturally-occurring materials may be used. Examples include those derived from: resource biomass such as fruits, grains, and root vegetables; wood, bamboo, hemp, jute, and kenaf, and pulp, paper, or cloth produced therefrom; waste biomass such as agricultural waste, food waste, and sewage sludge; unused biomass such as rice straw, wheat straw, and thinnings; and celluloses produced by ascidians, acetic acid bacteria, or other organisms. Each of these microfibrillated plant fibers may be used alone, or two or more of these may be used in combination.

Herein, the term "cellulose microfibrils" typically refers to cellulose fibers having an average fiber diameter of 10 um or less, more typically cellulose fibers having a microstructure with an average fiber diameter of 500 nm or less, formed of aggregated cellulose molecules. Typical cellulose microfibrils are formed of aggregated cellulose fibers having an average fiber diameter as indicated above, for example.

The microfibrillated plant fibers may be produced by any method, such as by chemically treating the raw materials of the cellulose microfibrils with alkali such as sodium hydroxide as needed, followed by mechanically grinding or beating using a refiner, a twin screw kneader (twin screw extruder), a twin screw kneading extruder, a high pressure homogenizer, a media-agitating mill, a stone mill, a grinder, a vibration mill, a sand grinder, or other devices. With such methods, substantially lignin-free microfibrillated plant fibers can be produced because lignin is separated from the raw materials by the chemical treatment. Other methods include ultra-high pressure treatment of the raw materials of the cellulose microfibrils.

The microfibrillated plant fibers may be commercially available from Sugino Machine Limited, etc.

The microfibrillated plant fibers may be prepared by the above production method followed by further treatment such as oxidation or various chemical modifications, or may be prepared by treatment (e.g., oxidation or various chemical modifications) of cellulose materials that are naturally-occurring materials usable as the sources of the cellulose microfibrils (e.g., wood, pulp, bamboo, hemp, jute, kenaf, agricultural waste, cloth, paper, ascidian cellulose), optionally followed by a fibrillation process. For example, oxidized microfibrillated plant fibers may be suitably used.

An exemplary oxidation process uses an N-oxyl compound, for example. The oxidation process using an N-oxyl compound may be carried out by allowing a co-oxidant to act on microfibrillated plant fibers in water in the presence of the N-oxyl compound as an oxidation catalyst. Examples of the N-oxyl compound include 2,2,6,6-tetramethylpiperidine-1-oxyl (TEMPO) and derivatives thereof. Examples of the co-oxidant include sodium hypochlorite.

The average fiber diameter of the microfibrillated plant fibers is preferably 10 um or less. When the average fiber diameter is within the range indicated above, the dispersion of the microfibrillated plant fibers in the elastomers can be improved. Moreover, the damage of the microfibrillated plant fibers during processing tends to be reduced. The average fiber diameter is more preferably 500 nm or less, still more preferably 100 nm or less, particularly preferably 50 nm or less. The lower limit of the average fiber diameter is not limited, but it is preferably 4 nm or more, more preferably 10 nm or more, still more preferably 20 nm or more, because otherwise the entangled microfibrillated plant fibers would be less likely to be separated from each other and thus less likely to be dispersed.

The average fiber length of the microfibrillated plant fibers is preferably 100 nm or more, more preferably 300 nm or more, still more preferably 500 nm or more. The average fiber length is preferably 5 mm or less, more preferably 1 mm or less, still more preferably 50 um or less, particularly preferably 3 um or less, most preferably 2 um or less. When the average fiber length is less than the lower limit or more than the upper limit, the same tendency as described for the average fiber diameter tends to occur.

When a combination of two or more microfibrillated plant fibers is used, the average fiber diameter and the average fiber length are each calculated as an average of all the microfibrillated plant fibers.

Herein, the average fiber diameter and average fiber length of the microfibrillated plant fibers may be measured by image analysis using scanning electron micrographs, image analysis using transmission electron micrographs, image analysis using atomic force micrographs, X-ray scattering data analysis, aperture impedance method (Coulter principle), or other methods.

The short fiber celluloses have good dispersibility in the elastomers and can maintain or improve the tensile strength of the elastomers without any impairment, so that good elastomer properties can be obtained.

The fiber width of the short fiber celluloses is preferably 3 to 200 um. Usually, it is preferred to incorporate fibrous fillers having a small fiber width into the thermoplastic elastomer compositions from the standpoint of reinforcement of the elastomers. However, fibrous fillers having a small fiber width tend not to orientate themselves. Hence, from the standpoint of the balance between the reinforcement of the elastomers and the orientation of the fibers and also from the standpoint of dispersion in the elastomers, the fiber width is preferably 10 um or larger, more preferably 15 um or larger, still more preferably 20 um or larger, but is preferably 120 um or smaller, more preferably 80 um or smaller, still more preferably 50 um or smaller.

The fiber length of the short fiber celluloses is preferably 20 to 1000 um. Like the fiber width, from the standpoint of the balance between the reinforcement of the elastomers and the orientation of the fibers and of dispersion in the elastomers, the fiber length is preferably 50 um or longer, more preferably 100 um or longer, still more preferably 200 um or longer, but is preferably 700 um or shorter, more preferably 500 um or shorter.

The ratio of the fiber length to the fiber width (fiber length/fiber width) of the short fiber celluloses is preferably 5 to 1000. Like the fiber width, from the standpoint of the balance between the reinforcement of the elastomers and the orientation of the fibers, the ratio of the fiber length to the fiber width is preferably 6 or higher, more preferably 10 or higher, but is preferably 800 or lower, more preferably 500 or lower, still more preferably 400 or lower, particularly preferably 300 or lower.

The fiber width and fiber length of the short fiber celluloses may be measured by image analysis using scanning atomic force micrographs, image analysis using scanning electron micrographs, image analysis using transmission electron micrographs, X-ray scattering data analysis, aperture impedance method (Coulter principle), or other methods.

The term "gel compounds" refers to materials produced by gelation of microfibrillated plant fibers or short fiber celluloses. Such gel compounds produced by gelation may be dispersed well. The gelation may be carried out by any method, such as by stirring with an ultra-high pressure homogenizer or other devices.

The amount of the poorly dispersible fillers per 100 parts by mass of elastomer components in the thermoplastic elastomer composition in the tread 4 and the thermoplastic elastomer composition in the sidewall 6 is preferably 0.1 parts by mass or more, more preferably 0.5 parts by mass or more, still more preferably 1 part by mass or more. The upper limit of the amount is preferably 50 parts by mass or less, more preferably 30 parts by mass or less, still more preferably 20 parts by mass or less, particularly preferably 10 parts by mass or less. When the amount is within the range indicated above, the effect tends to be better obtained.

From the standpoint of physical properties, the elastomer composition in the tread 4 and the elastomer composition in the sidewall 6 may each contain silica as filler. Examples of the silica include dry silica (anhydrous silica) and wet silica (hydrous silica). Wet silica is preferred among these because it contains a large number of silanol groups. Commercial products available from Degussa, Rhodia, Tosoh Silica Corporation, Solvay Japan, Tokuyama Corporation, etc. may be used. Each of these may be used alone, or two or more of these may be used in combination.

The amount of the silica per 100 parts by mass of elastomer components in the elastomer composition in the tread 4 and the elastomer composition in the sidewall 6 is preferably 25 parts by mass or more, more preferably 30 parts by mass or more, still more preferably 50 parts by mass or more. The upper limit of the amount is not limited, but it is preferably 300 parts by mass or less, more preferably 200 parts by mass or less, still more preferably 170 parts by mass or less, particularly preferably 100 parts by mass or less, most preferably 80 parts by mass or less. When the amount is not more than the upper limit, the effect tends to be better obtained.

The nitrogen adsorption specific surface area ($N_2SA$) of the silica is preferably 70 $m^2/g$ or more, more preferably 140 $m^2/g$ or more, still more preferably 160 $m^2/g$ or more. When the $N_2SA$ is not less than the lower limit, good ride quality after long-term storage and good tensile strength at break tend to be obtained. The upper limit of the $N_2SA$ of the silica is not limited, but it is preferably 500 $m^2/g$ or less, more preferably 300 $m^2/g$ or less, still more preferably 250 $m^2/g$ or less. When the $N_2SA$ is not more than the upper limit, good dispersion tends to be obtained.

The $N_2SA$ of the silica is measured by the BET method in accordance with ASTM D3037-93.

The thermoplastic elastomer composition containing silica preferably further contains a silane coupling agent.

Any silane coupling agent may be used, and examples include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyltetrasulfide, 2-triethoxysilylethyl-N,N-dimethylthiocarbamoyltetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z both available from Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. Commercial products available from Degussa, Momentive, Shin-Etsu Silicone, Tokyo Chemical Industry Co., Ltd., AZmax. Co., Dow Corning Toray Co., Ltd., etc. may be used. Each of these may be used alone, or two or more of these may be used in combination.

The amount of the silane coupling agent per 100 parts by mass of the silica in the elastomer composition in the tread 4 and the elastomer composition in the sidewall 6 is preferably 3 parts by mass or more, more preferably 6 parts by mass or more. When the amount is 3 parts by mass or more, good properties such as tensile strength at break tend to be obtained. The amount is preferably 20 parts by mass or less, more preferably 15 parts by mass or less. When the amount is 20 parts by mass or less, an effect commensurate with the amount tends to be produced.

From the standpoint of physical properties, the elastomer composition in the tread 4 and the elastomer composition in the sidewall 6 may each contain carbon black as filler. The use of carbon black may be more likely to increase the strength of the elastomer composition.

Any carbon black may be used, and examples include N134, N110, N220, N234, N219, N339, N330, N326, N351, N550, and N762. Commercial products available from Asahi Carbon Co., Ltd., Cabot Japan K.K., Tokai Carbon Co., Ltd., Mitsubishi Chemical Corporation, Lion Corporation, NSCC Carbon Co., Ltd., Columbia Carbon, etc. may be used. Each of these may be used alone, or two or more of these may be used in combination.

The amount of the carbon black per 100 parts by mass of elastomer components in the elastomer composition in the tread 4 and the elastomer composition in the sidewall 6 is preferably 1 part by mass or more, more preferably 3 parts by mass or more. The amount is preferably 20 parts by mass or less, more preferably 15 parts by mass or less. When the amount is not more than the upper limit, the effect tends to be better obtained.

The nitrogen adsorption specific surface area ($N_2SA$) of the carbon black is preferably 50 $m^2/g$ or more, more preferably 80 $m^2/g$ or more, still more preferably 100 $m^2/g$ or more. The $N_2SA$ is preferably 200 $m^2/g$ or less, more preferably 150 $m^2/g$ or less, still more preferably 130 $m^2/g$ or less. When the $N_2SA$ is within the range indicated above, the effect tends to be better obtained.

The nitrogen adsorption specific surface area of the carbon black can be determined in accordance with JIS K 6217-2:2001.

The elastomer composition may contain additional fillers other than the poorly dispersible fillers, silica, and carbon black. Examples of such additional fillers include calcium carbonate, talc, alumina, clay, aluminum hydroxide, aluminum oxide, and mica.

The elastomer composition in the tread 4 and the elastomer composition in the sidewall 6 may each contain a plasticizer. Any plasticizer may be used, and examples include liquid plasticizers which are liquid at 25°C and have plasticizing properties, such as oils and liquid resins, and solid plasticizers which are solid at 25°C and have plasticizing properties, such as resins (polymers which are solid at room temperature (25°C)). Each of these plasticizers may be used alone, or two or more of these may be used in combination.

The amount of the plasticizer (the combined amount of the liquid and solid plasticizers and other plasticizers) per 100 parts by mass of elastomer components in the elastomer composition in the tread 4 and the elastomer composition in the sidewall 6 is preferably 1 part by mass or more, more preferably 3 parts by mass or more, still more preferably 5 parts by mass or more. The amount is preferably 80 parts by mass or less, more preferably 60 parts by mass or less, still more preferably 50 parts by mass or less. When the amount is within the range indicated above, the effect tends to be better obtained.

Any oil may be used, and examples include conventional oils, including, for example: process oils such as paraffinic process oils, aromatic process oils, and naphthenic process oils; low PCA (polycyclic aromatic) process oils such as TDAE and MES; vegetable oils; and mixtures thereof. From the standpoints of abrasion resistance and tensile properties, aromatic process oils are preferred among these. Specific examples of the aromatic process oils include Diana Process Oil AH series available from Idemitsu Kosan Co., Ltd.

Any liquid resin may be used, and examples include liquid aromatic vinyl polymers, coumarone-indene resins, indene resins, terpene resins, rosin resins, and hydrogenated products thereof.

The term "liquid aromatic vinyl polymers" refers to resins produced by polymerization of $\alpha$-methylstyrene and/or styrene. Examples include liquid resins such as styrene homopolymers, $\alpha$-methylstyrene homopolymers, and copolymers of $\alpha$-methylstyrene and styrene.

The term "liquid coumarone-indene resins" refers to resins that contain coumarone and indene as main monomer components forming the skeleton (backbone) of the resins. Examples of monomer components which may be contained in the skeleton in addition to coumarone and indene include styrene, $\alpha$-methylstyrene, methylindene, and vinyltoluene.

The term "liquid indene resins" refers to liquid resins that contain indene as a main monomer component forming the skeleton (backbone) of the resins.

The term "liquid terpene resins" refers to liquid terpene-based resins typified by resins produced by polymerization of terpene compounds such as $\alpha$-pinene, $\beta$-pinene, camphene, or dipentene, and terpenephenol resins produced from terpene compounds and phenolic compounds.

The term "liquid rosin resins" refers to liquid rosin-based resins typified by natural rosins, polymerized rosins, modified rosins, and ester compounds thereof or hydrogenated products thereof.

The amount of the liquid plasticizers per 100 parts by mass of elastomer components in the elastomer composition in the tread 4 and the elastomer composition in the sidewall 6 is preferably 1 part by mass or more, more preferably 3 parts by mass or more, still more preferably 5 parts by mass or more. The amount is preferably 50 parts by mass or less, more preferably 30 parts by mass or less, still more preferably 20 parts by mass or less. When the amount is within the range indicated above, the effect tends to be better obtained.

Any solid resin may be used, and examples include solid styrene resins, coumarone-indene resins, terpene resins, p-t-butylphenol acetylene resins, acrylic resins, dicyclopentadiene resins (DCPD resins), C5 petroleum resins, C9 petroleum resins, and C5/C9 petroleum resins. Each of these may be used alone, or two or more of these may be used in combination.

The term "solid styrene resins" refers to solid polymers produced from styrenic monomers as structural monomers, and examples include polymers produced by polymerization of styrenic monomers as main components (at least 50% by mass). Specific examples include homopolymers produced by polymerization of single styrenic monomers (e.g., styrene, o-methylstyrene, m-methylstyrene, p-methylstyrene, $\alpha$-methylstyrene, p-methoxystyrene, p-tert-butylstyrene, p-phenylstyrene, o-chlorostyrene, m-chlorostyrene, or p-chlorostyrene), copolymers produced by copolymerization of two or more styrenic monomers, and copolymers of styrenic monomers and additional monomers copolymerizable therewith.

Examples of the additional monomers include acrylonitriles such as acrylonitrile and methacrylonitrile; unsaturated carboxylic acids such as acrylic acid and methacrylic acid; unsaturated carboxylic acid esters such as methyl acrylate and methyl methacrylate; dienes such as chloroprene, butadiene, and isoprene; olefins such as 1-butene and 1-pentene; and $\alpha,\beta$-unsaturated carboxylic acids and acid anhydrides thereof such as maleic anhydride.

In particular, solid $\alpha$-methylstyrene resins (e.g., $\alpha$-methylstyrene homopolymers, copolymers of $\alpha$-methylstyrene and styrene) are preferred.

Examples of the solid coumarone-indene resins include solid resins having structural units as described for the liquid coumarone-indene resins.

Examples of the solid terpene resins include polyterpene, terpene phenol, and aromatic modified terpene resins.

The term "polyterpene resins" refers to resins produced by polymerization of terpene compounds, or hydrogenated products of the resins. "Terpene compounds" refer to hydrocarbons having a composition represented by $(C_5H_8)_n$ or oxygen-containing derivatives thereof, each of which has a terpene backbone and is classified as, for example, a monoterpene $(C_{10}H_{16})$, sesquiterpene $(C_{15}H_{24})$, or diterpene $(C_{20}H_{32})$. Examples of the terpene compounds include $\alpha$-pinene, $\beta$-pinene, dipentene, limonene, myrcene, alloocimene, ocimene, $\alpha$-phellandrene, $\alpha$-terpinene, $\gamma$-terpinene, terpinolene, 1,8-cineole, 1,4-cineole, $\alpha$-terpineol, $\beta$-terpineol, and $\gamma$-terpineol.

Examples of the solid polyterpene resins include solid terpene resins made from the above-mentioned terpene compounds, such as $\alpha$-pinene resins, $\beta$-pinene resins, limonene resins, dipentene resins, and $\beta$-pinene-limonene resins, and solid hydrogenated terpene resins produced by hydrogenation of these terpene resins.

Examples of the solid terpene phenol resins include solid resins produced by copolymerization of the above-mentioned terpene compounds and phenolic compounds, and solid resins produced by hydrogenation of these resins. Specific examples include solid resins produced by condensation of the above-mentioned terpene compounds, phenolic compounds, and formaldehyde. Examples of the phenolic compounds include phenol, bisphenol A, cresol, and xylenol.

Examples of the solid aromatic modified terpene resins include solid resins formed by modification of terpene resins with aromatic compounds, and solid resins produced by hydrogenation of these resins. The aromatic compounds may be any compound having an aromatic ring, including, for example: phenol compounds such as phenol, alkylphenols, alkoxyphenols, and unsaturated hydrocarbon group-containing phenols; naphthol compounds such as naphthol, alkylnaphthols, alkoxynaphthols, and unsaturated hydrocarbon group-containing naphthols; styrene and styrene derivatives such as alkylstyrenes, alkoxystyrenes, and unsaturated hydrocarbon group-containing styrenes; coumarone; and indene.

Examples of the solid p-t-butylphenol acetylene resins include solid resins produced by condensation of p-t-butylphenol and acetylene.

Any solid acrylic resin may be used. Solvent-free solid acrylic resins are suitable because they contain little impurities and provide a sharp molecular weight distribution.

Examples of the solvent-free solid acrylic resins include (meth)acrylic resins (polymers) synthesized by high temperature continuous polymerization (high temperature continuous bulk polymerization as described in, for example, US Patent No. 4,414,370, JP S59-6207 A, JP H5-58005 B, JP H1-313522 A, US Patent No. 5010166, and annual research report TREND 2000 issued by Toagosei Co., Ltd., vol. 3, pp. 42-45) using no or minimal amounts of auxiliary raw materials such as polymerization initiators, chain transfer agents, and organic solvents. Herein, the term "(meth)acrylic" means methacrylic and acrylic.

The solid acrylic resins are preferably substantially free of auxiliary raw materials such as polymerization initiators, chain transfer agents, and organic solvents. The solid acrylic resins are preferably produced by continuous polymerization and have a relatively narrow compositional distribution or molecular weight distribution.

As described above, solid acrylic resins which are substantially free of auxiliary raw materials such as polymerization initiators, chain transfer agents, and organic solvents, namely those of high purity, are preferred. The purity of the solid acrylic resins (the resin content of the resins) is preferably 95% by mass or higher, more preferably 97% by mass or higher.

Examples of the monomer components of the solid acrylic resins include (meth)acrylic acids and (meth)acrylic acid derivatives such as (meth)acrylic acid esters (e.g., alkyl esters, aryl esters, and aralkyl esters), (meth)acrylamides, and (meth)acrylamide derivatives.

In addition to the (meth)acrylic acids or (meth)acrylic acid derivatives, aromatic vinyls, such as styrene, $\alpha$-methylstyrene, vinyltoluene, vinylnaphthalene, divinylbenzene, trivinylbenzene, or divinylnaphthalene, may also be used as monomer components of the solid acrylic resins.

The solid acrylic resins may be formed only of the (meth)acrylic components or may further contain constituent components other than the (meth)acrylic components.

The solid acrylic resins may contain a hydroxy, carboxyl, or silanol group, or other groups.

The amount of the solid plasticizers per 100 parts by mass of elastomer components in the elastomer composition in the tread 4 and the elastomer composition in the sidewall 6 is preferably 1 part by mass or more, more preferably 3 parts by mass or more, still more preferably 5 parts by mass or more. The amount is preferably 50 parts by mass or less, more preferably 30 parts by mass or less, still more preferably 20 parts by mass or less. When the amount is within the range indicated above, the effect tends to be better obtained.

The liquid and solid plasticizers may be commercially available from Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., ENEOS Corporation, Arakawa Chemical Industries, Ltd., Taoka Chemical Co., Ltd., etc.

From the standpoint of properties such as crack resistance and ozone resistance, the elastomer composition in the tread 4 and the elastomer composition in the sidewall 6 each preferably contain an antioxidant.

Any antioxidant may be used, and examples include naphthylamine antioxidants such as phenyl-$\alpha$-naphthylamine; diphenylamine antioxidants such as octylated diphenylamine and 4,4'-bis($\alpha$,$\alpha$'-dimethylbenzyl)diphenylamine;

p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as 2,2,4-trimethyl-1,2-dihydroquinoline polymer; monophenolic antioxidants such as 2,6-di-t-butyl-4-methylphenol and styrenated phenol; and bis-, tris-, or polyphenolic antioxidants such as tetrakis[methylene-3-(3',5'-di-t-butyl-4'-hydroxyphenyl)propionate]methane. Preferred among these are p-phenylenediamine or quinoline antioxidants, with N-(1,3-dimethylbutyl)-N'-phenyl-p-phenylenediamine or 2,2,4-trimethyl-1,2-dihydroquinoline polymer being more preferred. Commercial products available from Seiko Chemical Co., Ltd., Sumitomo Chemical Co., Ltd., Ouchi Shinko Chemical Industrial Co., Ltd., Flexsys, etc. may be used.

The amount of the antioxidant per 100 parts by mass of elastomer components in the elastomer composition in the tread 4 and the elastomer composition in the sidewall 6 is preferably 0.2 parts by mass or more, more preferably 0.5 parts by mass or more. When the amount is not less than the lower limit, sufficient ozone resistance tends to be obtained. The amount is preferably 7.0 parts by mass or less, more preferably 4.0 parts by mass or less. When the amount is not more than the upper limit, good appearance tends to be obtained.

The thermoplastic elastomer composition may contain stearic acid. The amount of the stearic acid per 100 parts by mass of elastomer components in the elastomer composition in the tread 4 and the elastomer composition in the sidewall 6 is preferably 0.5 to 10 parts by mass, more preferably 0.5 to 5 parts by mass.

The stearic acid may be a conventional one. For example, commercial products available from NOF Corporation, Kao Corporation, FUJIFILM Wako Pure Chemical Corporation, Chiba Fatty Acid Co., Ltd., may be used.

The thermoplastic elastomer composition preferably contains zinc oxide. The amount of the zinc oxide per 100 parts by mass of elastomer components in the elastomer composition in the tread 4 and the elastomer composition in the sidewall 6 is preferably 0.5 to 10 parts by mass, more preferably 1 to 5 parts by mass.

The zinc oxide may be a conventional one. For example, commercial products available from Mitsui Mining & Smelting Co., Ltd., Toho Zinc Co., Ltd., HakusuiTech Co., Ltd., Seido Chemical Industry Co., Ltd., Sakai Chemical Industry Co., Ltd., etc. may be used.

The thermoplastic elastomer composition may contain wax. Any wax may be used, and examples include petroleum waxes, natural waxes, and synthetic waxes produced by purifying or chemically treating a plurality of waxes. Each of these waxes may be used alone, or two or more of these may be used in combination.

Examples of the petroleum waxes include paraffin waxes and microcrystalline waxes. The natural waxes may be any wax derived from non-petroleum resources, and examples include plant waxes such as candelilla wax, carnauba wax, Japan wax, rice wax, and jojoba wax; animal waxes such as beeswax, lanolin, and spermaceti; mineral waxes such as ozokerite, ceresin, and petrolatum; and purified products of the foregoing waxes. Commercial products available from Ouchi Shinko Chemical Industrial Co., Ltd., Nippon Seiro Co., Ltd., Seiko Chemical Co., Ltd., etc. may be used. The amount of the wax may be appropriately selected in view of ozone resistance and cost.

When the thermoplastic elastomer composition contains a diene-based rubber component, it may contain sulfur to moderately crosslink the polymer chains of the diene-based rubber component, thereby providing a good balance between the above-mentioned properties.

The amount of the sulfur per 100 parts by mass of the diene-based rubber component in the elastomer composition in the tread 4 and the elastomer composition in the sidewall 6 is preferably 0.1 parts by mass or more, more preferably 0.5 parts by mass or more, still more preferably 0.7 parts by mass or more. The amount is preferably 6.0 parts by mass or less, more preferably 4.0 parts by mass or less, still more preferably 3.0 parts by mass or less.

Examples of the sulfur include those commonly used in the rubber industry, such as powdered sulfur, precipitated sulfur, colloidal sulfur, insoluble sulfur, highly dispersible sulfur, and soluble sulfur. Commercial products available from Tsurumi Chemical Industry Co., Ltd., Karuizawa Sulfur Co., Ltd., Shikoku Chemicals Corporation, Flexsys, Nippon Kanryu Industry Co., Ltd., Hosoi Chemical Industry Co., Ltd., etc. may be used. Each of these may be used alone, or two or more of these may be used in combination.

The thermoplastic elastomer composition may contain a vulcanization accelerator.

The amount of the vulcanization accelerator in the elastomer composition in the tread 4 and the elastomer composition in the sidewall 6 is not limited and may be arbitrarily selected according to the desired cure rate or crosslink density. However, the amount is usually 0.3 to 10 parts by mass, preferably 0.5 to 7 parts by mass, per 100 parts by mass of elastomer components.

Any type of vulcanization accelerator may be used including usual ones. Examples of the vulcanization accelerator include thiazole vulcanization accelerators such as 2-mercaptobenzothiazole, di-2-benzothiazolyl disulfide, and N-cyclohexyl-2-benzothiazylsulfenamide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazole sulfenamide, N-t-butyl-2-benzothiazolylsulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. Each of these may be used alone, or two or more of these may be used in combination. From the standpoint of the balance between the above-mentioned properties, sulfenamide vulcanization accelerators and guanidine vulcanization accelerators are preferred among these.

The thermoplastic elastomer composition may contain any appropriate additive usually used in the application field, such as release agents and pigments, in addition to the above-mentioned components.

The thermoplastic elastomer composition may be prepared by known methods. For example, it may be prepared from the above-mentioned thermoplastic elastomers and other components by known forming techniques such as injection molding. Alternatively, it may be prepared by kneading the components in a rubber kneading machine such as an open roll mill or Banbury mixer, optionally followed by crosslinking, for example. With regard to the kneading conditions, the kneading temperature is usually 50°C to 200°C, preferably 80°C to 190°C, and the kneading time is usually 30 seconds to 30 minutes, preferably one minute to 30 minutes.

The thermoplastic elastomer composition is preferably produced by heating a composition containing the thermoplastic elastomer, etc. at 100°C or higher and is more preferably produced by heating a composition containing the thermoplastic polyurethane elastomer and 4,4'-diphenylmetane diisocyanate at 100°C or higher. The heating temperature is more preferably 130°C or higher, still more preferably 140°C or higher, particularly preferably 150°C or higher. The heating time is not limited and may be appropriately determined. Yet, the heating time is preferably 0.5 to 24 hours, more preferably 2 to 12 hours, still more preferably 3 to 8 hours.

In the tire 2, each sidewall 6 is connected to an end of the tread 4. To better obtain the effect, a joint 5 is preferably outwardly away by more than 1/4 the tire cross-sectional width Wt (Wt/4) from an equatorial plane of the tire in a tire width direction.

The mechanism of the effect is not clear, but is believed to be due to better ground contact of the entire thermoplastic elastomer composition in the tread. Thus, handling stability may further be improved.

The connection between the tread 4 and the sidewall 6, and optionally other components, may be performed by known methods to connect thermoplastic elastomer compositions. Examples of the methods include hot plate welding, adhesive welding, vibration welding, ultrasonic welding, injection welding, and laser welding.

To better obtain the effect, the tread 4 desirably contains a tread-reinforcing layer 4a as shown in FIG. 1.

The mechanism of the effect is not clear, but is believed to be due to high internal pressure state and suppression of deformation during rotation provided by the reinforcing layer in the tread. Thus, handling stability may further be improved.

The tread-reinforcing layer 4a may be any component that can reinforce the tread 4.

In the tire 2 of FIG. 1, the tread-reinforcing layer 4a is located in the tread slightly inwardly in the tire radial direction. Yet, the tread-reinforcing layer 4a may be located at any position in the tread 4, and the position may be appropriately determined taking the reinforcing effect into consideration. Examples of the position include at or near the center, at an outer side, or at an inner side in the tread in the tire radial direction and at the innermost face of the tread.

To better obtain the effect, the tire 2 preferably includes a support 8 on at least a part of a tire inner cavity side of the tread 4 and/or a tire inner cavity side of the sidewall 6.

The mechanism of the effect is not clear, but is believed to be due to the support which is provided on a tire inner cavity side of the tread and/or a tire inner cavity side of the sidewall and which supports the entire tire. Thus, deformation is suppressed, and handling stability may further be improved.

In the tire 2 of FIG. 1, the support 8 is provided on the entire inner faces of the tread 4 and the sidewall 6. The support 8 may be provided only on the inner face of the tread 4 or only on the inner face of the sidewall 6. Alternatively, the support 8 may be partly provided on the inner face of the tread 4 and/or on the inner face of the sidewall 6. To better obtain the effect, the support 8 is preferably provided on the entire inner faces of the tread 4 and the sidewall 6.

Other layers or components may be present between the tread 4 and the support 8 or between the sidewall 6 and the support 8.

To better obtain the effect, the tread-reinforcing layer 4a and the support 8 are each preferably a resin-containing layer or component.

Any resin that can impart the above-mentioned effect is usable as the resin in the tread-reinforcing layer 4a and the support 8.

To better obtain the effect, the resin in the support 8 is preferably a polyolefin resin or a polyester resin, more preferably a polyolefin resin, still more preferably a polyethylene resin or a polypropylene resin, further preferably a polyethylene resin.

The resin in the tread-reinforcing layer 4a is preferably a polyester resin or a polyurethane resin, more preferably a polyester resin, still more preferably polyethylene terephthalate.

Metal fiber cords such as steel cords or organic fiber cords such as polyester cords, nylon cords, rayon cords, and aramid cords may also be suitably used in the tread-reinforcing layer 4a and the support 8.

To better obtain the effect, the modulus of elasticity in tension of the support 8 is preferably 0.05 GPa or higher, more preferably 0.09 GPa or higher, still more preferably 0.1 GPa or higher, further still more preferably 0.5 GPa or higher, even further still more preferably 0.9 GPa or higher, particularly preferably 0.91 GPa or higher. The upper limit is preferably 13.0 GPa or lower, more preferably 3.0 GPa or lower, still more preferably 2.0 GPa or lower, particularly preferably 1.5 GPa or lower.

In the present invention, the modulus of elasticity in tension is measured in accordance with JIS R 7606.

The above effect is obtained when the modulus of elasticity in tension is controlled in a predetermined range, in particular, controlled to be 0.1 to 13.0 GPa. The mechanism of the effect is not clear, but is believed to be due to good response provided by the support having a predetermined range of modulus of elasticity in tension. Thus, handling stability may be improved.

The thickness of the tread-reinforcing layer 4a is preferably 0.5 mm or more, more preferably 0.7 mm or more, still more preferably 0.8 mm or more, particularly preferably 1.0 mm or more, but is preferably 2.5 mm or less, more preferably 2.0 mm or less, still more preferably 1.5 mm or less. When the thickness is within the range indicated above, the effect tends to be better obtained.

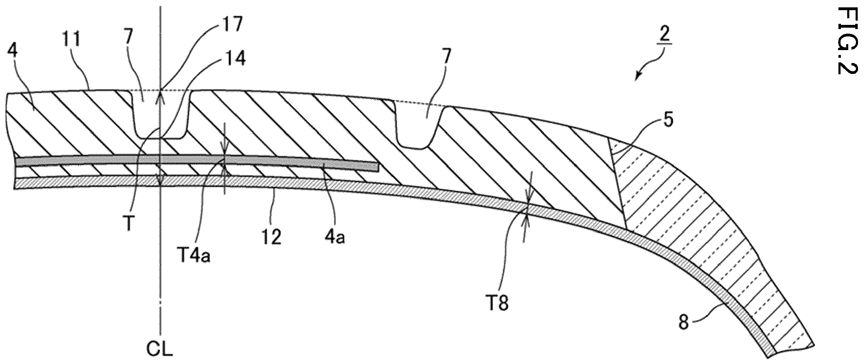

In the present invention, the term "thickness of tread-reinforcing layer" refers to an average of the thicknesses of the tread-reinforcing layer measured at points on the surface of the tread-reinforcing layer in a cross section taken along a plane including the axis of the tire. In the tire in FIG. 2, T4a denotes a thickness at one point on the surface of the tread-reinforcing layer. The thickness of the tread-reinforcing layer 4a is an average of the thicknesses measured at points.

The cross-sectional width of the tread-reinforcing layer 4a in the tire width direction is preferably 50 mm or more, more preferably 65 mm or more, still more preferably 70 mm or more, further still more preferably 175 mm or more, but is preferably 300 mm or less, more preferably 270 mm or less, still more preferably 250 mm or less. When the cross-sectional width is within the range indicated above, the effect tends to be better obtained.

In the present invention, the term "cross-sectional width of tread-reinforcing layer in the tire width direction" refers to a linear distance between the edges of the tread-reinforcing layer in the tire width direction in a cross section taken along a plane including the axis of the tire. In the tire 2 in FIG. 1, W4a denotes the cross-sectional width.

The ratio "cross sectional width (mm) of the tread-reinforcing layer 4a in the tire circumferential direction)/thickness (mm) of the tread-reinforcing layer 4a" is preferably 50 or higher, more preferably 65 or higher, still more preferably 70 or higher, further still more preferably 175 or higher, but is preferably 300 or loser, more preferably 270 or lower, still more preferably 250 or lower. When the ratio is within the range indicated above, the effect tends to be better obtained.

The thickness of the support 8 is preferably 0.5 mm or more, more preferably 0.7 mm or more, still more preferably 0.8 mm or more, particularly preferably 1.0 mm or more, but is preferably 2.0 mm or less, more preferably 1.8 mm or less, still more preferably 1.5 mm or less. When the thickness is within the range indicated above, the effect tends to be better obtained.

In the present invention, the term "thickness of support" refers to an average of the thicknesses of the support measured at points on the surface of the support in a cross section taken along a plane including the axis of the tire. In the tire in FIG. 2, T8 denotes a thickness at one point on the surface of the support. The thickness of the support 8 is an average of the thicknesses measured at points.

From the standpoint of handling stability and the like, a bead in the tire 2 may include a composition layer capable of functioning as a rubber composition in a clinch, a bead apex, or other components which may be included in conventional tires or may include a core consisting of a wound inextensible wire, specifically a wound steel cord.

Like conventional tires, the tire 2 may include a carcass in the tread and/or the sidewall. The carcass includes a carcass ply. The carcass ply is formed of a large number of parallel cords and a coating layer. The absolute value of the angle of each cord to the equatorial plane of the tire is suitably from 75° to 90°. In other words, the carcass preferably has a radial structure. The cords are formed of organic fibers. Examples of preferable organic fibers include polyester fibers, nylon fibers, rayon fibers, polyethylene naphthalate fibers, and aramid fibers.

The tire 2 may include a belt layer and a belt-reinforcing layer in the tread.

Though not shown, the belt layer and the belt-reinforcing layer each may include multiple parallel cords and a coating layer. When a belt layer is present, the cords therein are tilted relative to the equatorial plane. The absolute value of the tilt angle is generally at least 10° but not greater than 35°. When multiple belt layers are present, the tilt direction of one of two layers next to each other relative to the equatorial plane is preferably opposite to that of the other layer. The material of the cords in the belt layer is preferably steel. The cords may include organic fibers. Examples of the organic fibers include polyester fibers, nylon fibers, rayon fibers, polyethylene naphthalate fibers, and aramid fibers.

When a belt-reinforcing layer is present, it is preferably located outward of the belt layer in the tire radial direction. Though not shown, the belt-reinforcing layer includes cords and a coating layer. The cords are spirally wound and may have what is called a jointless structure. The cords substantially extend in the circumferential direction. The angle of the cords relative to the circumferential direction is not greater than 5° or even not greater than 2°. The cords restrict the belt layer to prevent or reduce the lifting of the belt layer. The cords include organic fibers. Preferred examples of the organic fibers include nylon fibers, polyester fibers, rayon fibers, polyethylene naphthalate fibers, and aramid fibers.

The presence of any of the carcass, the belt layer, and the belt-reinforcing layer can reduce the deformation force to the tire, thereby reducing the permanent deformation of the tire during storage. Thus, ride quality after storage may be more easily improved.

An elastomer layer having excellent resistance to air permeation may be provided as an innermost layer of the tire. The elastomer layer may be what is called an inner liner containing butyl rubber or a thermoplastic elastomer layer including a styrene-isobutylene-styrene copolymer. The presence of such a layer tends to better maintain the air pressure, so that deformation of the tire by the weight of the car body during storage can be better prevented. Thus, the ride quality after long-term storage may be more easily maintained.

FIG. 2 illustrates a cross section of the tread 4 of the tire 2 taken along a plane including the axis of the tire. In FIG. 1 and FIG. 2, a crown center 17 located at the equatorial plane, CL, corresponds to the "tread crown". The displacement A in the tire radial direction at an outermost surface 14 of the tread crown when the tire 2 is mounted on a normal rim and then inflated to the predetermined air pressure satisfies the relationship (1).

In the tire 2, the total thickness T (total thickness at the tread crown) of the tread 4 measured at the equatorial plane in a cross section taken in the tire radial direction refers to a distance from a tread surface 11 at the equatorial plane to an inner face 12 of the tread. Since the tire 1 has a groove 7 located at the equatorial plane of the tire, the tread surface 11 refers to a straight line connecting the edges of the groove 7 which are on the radially outermost surface of the tire. The total thickness T (mm) at the tread crown and the outer diameter Dt (mm) of the tire satisfy the relationship (2).

EXAMPLES

Examples which are believed to be preferred to carry out the present invention are described below. The scope of the present invention is not limited the examples.

Tables show compositions obtainable by using the following chemicals according to the formulations indicated in the tables as well as the results of studies on the tires including the compositions determined by the evaluation methods described below.

TPU 1: Elastollan 1198ATR available from BASF (polyether thermoplastic polyurethane elastomer)

TPU 2: Elastollan 1180A available from BASF (polyether thermoplastic polyurethane elastomer)

TPU 3: Elastollan C60A10WN available from BASF (polyester thermoplastic polyurethane elastomer)

TPU 4: RESAMINE P-2283 available from Dainichiseika Color & Chemicals Mfg. Co., Ltd. (thermoplastic polyurethane elastomer)

TPU 5: RESAMINE P-6165 available from Dainichiseika Color & Chemicals Mfg. Co., Ltd. (thermoplastic polyurethane elastomer)

TPU 6: RESAMINE PB-2285 available from Dainichiseika Color & Chemicals Mfg. Co., Ltd. (thermoplastic polyurethane elastomer)

TPU 7: RESAMINE P-2275 available from Dainichiseika Color & Chemicals Mfg. Co., Ltd. (thermoplastic polyurethane elastomer)

Crosslinking agent: 4,4'-diphenylmethanediisocyanate (MDI, CROSSNATE EM-30 (MDI content: 30 to 40%) available from Dainichiseika Color & Chemicals Mfg. Co., Ltd.; in Table 1, the amount of the crosslinking agent is MDI equivalent amount)

LDPE: NOVATEC LD LJ902 available from Japan Polyethylene Corporation (low-density polyethylene)

HDPE: NOVATEC HD HJ360 available from Japan Polyethylene Corporation (high-density polyethylene)

PET: SA-1206 available from Unitika Ltd. (polyethylene terephthalate)

(Preparation of thermoplastic elastomer composition)

The materials according to the formulations in Table 1 are kneaded by a twin screw extruder to prepare (unheated) thermoplastic elastomer compositions. Subsequently, the (unheated) thermoplastic elastomer compositions are heated using a drier at 100°C for six hours to obtain (heated) thermoplastic elastomer compositions A to H.

[Table 1]

| Thermoplastic elastomer composition | | | | | | | | |
|---|---|---|---|---|---|---|---|---|
| | Composition A | Composition B | Composition C | Composition D | Composition E | Composition F | Composition G | Composition H |
| TPU1 (1198ATR) | 100 | 50 | | | | | | |
| TPU2 (1180A) | | 50 | | | | | | |
| TPU3 (C60A10WN) | | | | 100 | 100 | | | |
| TPU4 (P-2283) | | | 100 | | | | | |
| TPU5 (P-6165) | | | | | | 100 | | |
| TPU6 (PB-2285) | | | | | | | 100 | |
| TPU7 (P-2275) | | | | | | | | 100 |
| Crosslinking agent (EM-30) | | 5 | | | 3 | 5 | 7 | 7 |
| Complex modulus of elasticity E* (MPa) | 125.0 | 42.7 | 13.4 | 6.8 | 7.0 | 6.2 | 14.8 | 7.9 |

(Production of test tire)

The (heated) thermoplastic elastomer compositions A to H in Table 1 selected as specified in Tables 2 and 3 are each injection-molded into the shape of a tread or a sidewall.

The injection-molding of the composition into a tread which includes a tread-reinforcing layer is performed such that the tread-reinforcing layer is contained in the tread and is provided in the entire tread of the tire. In Tables 2 and 3, the symbol "-" in the "Tread-reinforcing layer" section means no tread-reinforcing layer, and the values in the "Thickness (mm) of tread-reinforcing layer" section and the values in the "Cross-sectional width (mm) of tread-reinforcing layer in tire width direction" section mean the thicknesses and the cross-sectional widths, respectively, of the tread-reinforcing layers.

For better fit with a rim, the injection-molding of the composition into a sidewall is performed such that a bead wire is contained in the sidewall and is provided in the entire sidewall of the tire.

Separately, the materials shown in Tables 2 and 3 are each injection-molded into the shape of a support. The symbol "-" in the "Support" section means no support, and the material name in the section means that an inner support layer formed of the material is provided.

Thereafter, the injection-molded products are welded with each other to obtain a test tire illustrated in FIG. 1 (specification as shown in Table 2 or 3, Table 2: kart tire, Table 3: passenger car tire (205/55R16)).

Using the (heated) thermoplastic elastomer compositions A to H obtained with the different formulations in Table 1, test tires are virtually produced according to the specifications indicated in Table 2 or 3. Tables 2 and 3 show the results determined by the evaluation methods described below.

The standard comparative examples are

Comparative Example 1-9 in Table 2 and
Comparative Example 2-9 in Table 3.

<Viscoelasticity test>

Samples of the compositions A to H are collected from the tread and the sidewall of the test tires produced using the (heated) thermoplastic elastomer compositions A to H. Each sample has a width of 4 mm, a length of 20 mm, and a thickness of 1 mm and contains a composition selected from the compositions A to H. The complex moduli of elasticity of the samples are measured at a temperature of 30°C, an initial strain of 10%, a dynamic strain of 1%, and a frequency of 10 Hz in a tensile mode using RSA series available from TA Instruments.

<Modulus of elasticity in tension>

The modulus of elasticity in tension of the support is measured in accordance with JIS R 7606.

<Handling stability>

The handling stability of each test tire when the tire is mounted on a rim with an internal pressure and is rotated under a load assumed for a passenger car with 1500 cc displacement is determined in a simulation test. The result is expressed as a score relative to the result of the standard comparative example set to 100. A higher score indicates better handling stability.

[Table 2]

Kart tire

| | Comparative Example | | | | | | | | | Example | | | | | | | |
|---|---|---|---|---|---|---|---|---|---|---|---|---|---|---|---|---|---|
| | 1-1 | 1-2 | 1-3 | 1-4 | 1-5 | 1-6 | 1-7 | 1-8 | 1-9 | 1-1 | 1-2 | 1-3 | 1-4 | 1-5 | 1-6 | 1-7 | 1-8 |
| **Specification** | | | | | | | | | | | | | | | | | |
| Tread composition | Composition C | Composition C | Composition C | Composition C | Composition C | Composition C | Composition D | Composition B | Composition D | Composition C | Composition C | Composition E | Composition E | Composition E | Composition F | Composition E | Composition H |
| Sidewall composition | Composition A | Composition A | Composition A | Composition A | Composition A | Composition A | Composition A | Composition B | Composition B | Composition A | Composition A | Composition A | Composition B | Composition B | Composition G | Composition G | Composition G |
| Tread-reinforcing layer | - | - | - | - | PET | PET | PET | PET | PET | PET | PET | PET | PET | PET | PET | PET | PET |
| Support (Entire inner face of tread and sidewall) | - | - | - | - | - | LDPE | LDPE | HDPE | LDPE | - | LDPE | LDPE | HDPE | LDPE | LDPE | LDPE | LDPE |
| Cross-sectional width Wt (mm) of tire | 133 | 133 | 133 | 133 | 133 | 133 | 133 | 133 | 133 | 133 | 133 | 133 | 133 | 133 | 133 | 133 | 133 |
| Thickness (mm) of tread-reinforcing layer | - | - | - | - | 1.0 | 1.0 | 1.0 | 1.0 | 1.0 | 1.0 | 1.0 | 1.0 | 1.0 | 1.0 | 1.0 | 1.0 | 1.0 |
| Cross-sectional width (mm) of tread-reinforcing layer in tire width direction | - | - | - | - | 70 | 70 | 70 | 70 | 70 | - | 70 | 70 | 70 | 70 | 70 | 70 | 70 |
| Cross-sectional width (mm) of tread-reinforcing layer in tire width direction/Thickness (mm) of tread-reinforcing layer | - | - | - | - | 70 | 70 | 70 | 70 | 70 | - | 70 | 70 | 70 | 70 | 70 | 70 | 70 |
| Thickness (mm) of support | - | - | - | - | - | 1.0 | 1.0 | 1.0 | 1.0 | - | 1.0 | 1.0 | 1.0 | 1.0 | 1.0 | 1.0 | 1.0 |
| Outer diameter Dt (mm) of tire | 255 | 255 | 255 | 255 | 255 | 255 | 255 | 255 | 255 | 255 | 255 | 255 | 255 | 255 | 255 | 255 | 255 |
| Cross-sectional height H (mm) of tire | 64 | 64 | 64 | 64 | 64 | 64 | 64 | 64 | 64 | 64 | 64 | 64 | 64 | 64 | 64 | 64 | 64 |
| Rim diameter R (mm) | 127 | 127 | 127 | 127 | 127 | 127 | 127 | 127 | 127 | 127 | 127 | 127 | 127 | 127 | 127 | 127 | 127 |
| Total thickness T (mm) of crown | 10.0 | 10.0 | 5.0 | 10.0 | 10.0 | 10.0 | 10.0 | 10.0 | 10.0 | 5.0 | 5.0 | 5.0 | 5.0 | 5.0 | 5.0 | 5.0 | 5.0 |
| Virtual volume (cm³) of tire | 5108 | 5108 | 5108 | 5108 | 5108 | 5108 | 5108 | 5108 | 5108 | 5108 | 5108 | 5108 | 5108 | 5108 | 5108 | 5108 | 5108 |
| Predetermined air pressure (kPa) | 100 | 100 | 100 | 100 | 100 | 100 | 100 | 100 | 100 | 100 | 100 | 100 | 100 | 100 | 100 | 100 | 100 |
| Displacement (mm) at tread crown | 15 | 15 | 30 | 15 | 3 | 3 | 3 | 3 | 3 | 3 | 3 | 3 | 3 | 3 | 3 | 3 | 3 |
| Displacement A (%) at tread crown | 5.9 | 5.9 | 11.8 | 5.9 | 1.2 | 1.2 | 1.2 | 1.2 | 1.2 | 1.2 | 1.2 | 1.2 | 1.2 | 1.2 | 1.2 | 1.2 | 1.2 |
| T/Dt | 0.039 | 0.039 | 0.020 | 0.039 | 0.039 | 0.039 | 0.039 | 0.039 | 0.039 | 0.020 | 0.020 | 0.020 | 0.020 | 0.020 | 0.020 | 0.020 | 0.020 |
| H/Wt × 100 (%) | 48 | 48 | 48 | 48 | 48 | 48 | 48 | 48 | 48 | 48 | 48 | 48 | 48 | 48 | 48 | 48 | 48 |
| Position connecting tread and sidewall (Distance from equatorial plane) (mm) | 30 | 30 | 30 | 45 | 45 | 45 | 45 | 45 | 45 | 45 | 45 | 45 | 45 | 45 | 45 | 45 | 45 |
| Et* (Complex modulus of elasticity (MPa) of thermoplastic elastomer composition in tread) | 13.4 | 13.4 | 13.4 | 13.4 | 13.4 | 13.4 | 6.8 | 6.8 | 6.8 | 13.4 | 13.4 | 7.0 | 7.0 | 7.0 | 6.2 | 7.0 | 7.9 |
| Es* (Complex modulus of elasticity (MPa) of thermoplastic elastomer composition in sidewall) | 125 | 125 | 125 | 125 | 125 | 125 | 125 | 42.7 | 42.7 | 125 | 125 | 125 | 42.7 | 42.7 | 14.8 | 14.8 | 14.8 |
| Es*/Et* | 9.3 | 9.3 | 9.3 | 9.3 | 9.3 | 9.3 | 18.4 | 6.3 | 6.3 | 9.3 | 9.3 | 17.9 | 6.1 | 6.1 | 2.4 | 2.1 | 1.9 |
| Modulus of elasticity in tension (GPa) of support | - | - | - | - | - | 0.09 | 0.09 | 0.09 | 0.91 | - | 0.09 | 0.09 | 0.09 | 0.91 | 0.09 | 0.09 | 0.09 |
| **Evaluation** | | | | | | | | | | | | | | | | | |
| Handling stability | 72 | 72 | 68 | 74 | 84 | 89 | 93 | 95 | 100 | 116 | 126 | 128 | 132 | 137 | 145 | 148 | 150 |

[Table 3]

Passenger car tire

| | Comparative Example | | | | | | | | | Example | | | | | | | |
|---|---|---|---|---|---|---|---|---|---|---|---|---|---|---|---|---|---|
| | 2-1 | 2-2 | 2-3 | 2-4 | 2-5 | 2-6 | 2-7 | 2-8 | 2-9 | 2-1 | 2-2 | 2-3 | 2-4 | 2-5 | 2-6 | 2-7 | 2-8 |
| **Specification** | | | | | | | | | | | | | | | | | |
| Tread composition | Composition C | Composition C | Composition C | Composition C | Composition C | Composition C | Composition D | Composition D | Composition D | Composition C | Composition C | Composition E | Composition E | Composition E | Composition F | Composition E | Composition H |
| Sidewall composition | Composition A | Composition A | Composition A | Composition A | Composition A | Composition A | Composition A | Composition B | Composition B | Composition A | Composition A | Composition A | Composition B | Composition B | Composition G | Composition G | Composition G |
| Tread-reinforcing layer | - | - | - | - | PET | PET | PET | PET | PET | PET | PET | PET | PET | PET | PET | PET | PET |
| Support (Entire inner face of tread and sidewall) | - | - | - | - | - | LDPE | LDPE | HDPE | LDPE | - | LDPE | LDPE | HDPE | LDPE | LDPE | LDPE | LDPE |
| Cross-sectional width Wt (mm) of tire | 205 | 205 | 205 | 205 | 205 | 205 | 205 | 205 | 205 | 205 | 205 | 205 | 205 | 205 | 205 | 205 | 205 |
| Thickness (mm) of tread-reinforcing layer | - | - | - | - | 1.0 | 1.0 | 1.0 | 1.0 | 1.0 | 1.0 | 1.0 | 1.0 | 1.0 | 1.0 | 1.0 | 1.0 | 1.0 |
| Cross-sectional width (mm) of tread-reinforcing layer in tire width direction | - | - | - | - | 175 | 175 | 175 | 175 | 175 | - | 175 | 175 | 175 | 175 | 175 | 175 | 175 |
| Cross-sectional width (mm) of tread-reinforcing layer in tire width direction/Thickness (mm) of tread-reinforcing layer | - | - | - | - | 175 | 175 | 175 | 175 | 175 | - | 175 | 175 | 175 | 175 | 175 | 175 | 175 |
| Thickness (mm) of support | - | - | - | - | - | 1.0 | 1.0 | 1.0 | 1.0 | - | 1.0 | 1.0 | 1.0 | 1.0 | 1.0 | 1.0 | 1.0 |
| Outer diameter Dt (mm) of tire | 632 | 632 | 632 | 632 | 632 | 632 | 632 | 632 | 632 | 632 | 632 | 632 | 632 | 632 | 632 | 632 | 632 |
| Cross-sectional height H (mm) of tire | 113 | 113 | 113 | 113 | 113 | 113 | 113 | 113 | 113 | 113 | 113 | 113 | 113 | 113 | 113 | 113 | 113 |
| Rim diameter R (mm) | 406.4 | 406.4 | 406.4 | 406.4 | 406.4 | 406.4 | 406.4 | 406.4 | 406.4 | 406.4 | 406.4 | 406.4 | 406.4 | 406.4 | 406.4 | 406.4 | 406.4 |
| Total thickness T (mm) of crown | 23.0 | 23.0 | 10.0 | 23.0 | 23.0 | 23.0 | 23.0 | 23.0 | 23.0 | 10.0 | 10.0 | 10.0 | 10.0 | 10.0 | 10.0 | 10.0 | 10.0 |
| Virtual volume (cm$^3$) of tire | 37698 | 37698 | 37698 | 37698 | 37698 | 37698 | 37698 | 37698 | 37698 | 37698 | 37698 | 37698 | 37698 | 37698 | 37698 | 37698 | 37698 |
| Predetermined air pressure (kPa) | 250 | 250 | 250 | 250 | 250 | 250 | 250 | 250 | 250 | 250 | 250 | 250 | 250 | 250 | 250 | 250 | 250 |
| Displacement (mm) at tread crown | 22 | 5 | 30 | 5 | 3 | 3 | 3 | 3 | 3 | 3 | 3 | 3 | 3 | 3 | 3 | 3 | 3 |
| Displacement A (%) at tread crown | 3.5 | 0.8 | 4.7 | 0.8 | 0.5 | 0.5 | 0.5 | 0.5 | 0.5 | 0.5 | 0.5 | 0.5 | 0.5 | 0.5 | 0.5 | 0.5 | 0.5 |
| T/Dt | 0.036 | 0.036 | 0.016 | 0.036 | 0.036 | 0.036 | 0.036 | 0.036 | 0.036 | 0.016 | 0.016 | 0.016 | 0.016 | 0.016 | 0.016 | 0.016 | 0.016 |
| H/Wt × 100 (%) | 55 | 55 | 55 | 55 | 55 | 55 | 55 | 55 | 55 | 55 | 55 | 55 | 55 | 55 | 55 | 55 | 55 |
| Position connecting tread and sidewall (Distance from equatorial plane) (mm) | 50 | 50 | 50 | 90 | 90 | 90 | 90 | 90 | 90 | 90 | 90 | 90 | 90 | 90 | 90 | 90 | 90 |
| Et* (Complex modulus of elasticity (MPa) of thermoplastic elastomer composition in tread) | 13.4 | 13.4 | 13.4 | 13.4 | 13.4 | 13.4 | 6.8 | 6.8 | 6.8 | 13.4 | 13.4 | 7.0 | 7.0 | 7.0 | 6.2 | 7.0 | 7.9 |
| Es* (Complex modulus of elasticity (MPa) of thermoplastic elastomer composition in sidewall) | 125 | 125 | 125 | 125 | 125 | 125 | 125 | 42.7 | 42.7 | 125 | 125 | 125 | 42.7 | 42.7 | 14.8 | 14.8 | 14.8 |
| Es*/Et* | 9.3 | 9.3 | 9.3 | 9.3 | 9.3 | 9.3 | 18.4 | 6.3 | 6.3 | 9.3 | 9.3 | 17.9 | 6.1 | 6.1 | 2.4 | 2.1 | 1.9 |
| Modulus of elasticity in tension (GPa) of support | - | - | - | - | - | 0.09 | 0.09 | 0.09 | 0.91 | - | 0.09 | 0.09 | 0.09 | 0.91 | 0.09 | 0.09 | 0.09 |
| **Evaluation** Handling stability | 71 | 71 | 68 | 73 | 84 | 89 | 92 | 95 | 100 | 120 | 131 | 133 | 137 | 142 | 150 | 153 | 155 |

The present invention (1) relates to a tire, including a tread and a sidewall each including a thermoplastic elastomer composition,

the tire satisfying the following relationship (1):

$$(1)\ A \leq 3.0\%,$$

wherein A denotes a displacement in a tire radial direction at an outermost surface of a tread crown when the tire is mounted on a normal rim and then inflated to a predetermined air pressure given below,
a total thickness T (mm) at the tread crown and an outer diameter Dt (mm) of the tire satisfying the following relationship (2):

$$(2)\ T/Dt \leq 0.034,$$

<Predetermined air pressure>

250 (kPa): for the tire with a virtual volume V of 15000 $cm^3$ or more, or
0.0152 $\times$ v + 22.553 (kPa): for the tire with a virtual volume V of less than 15000 $cm^3$,
wherein the virtual volume V ($mm^3$) of the tire is calculated from the outer diameter Dt (mm) of the tire, a cross-sectional width Wt (mm) of the tire, a rim diameter R (mm), and a cross-sectional height H (mm) of the tire using the following formulas:

$$V = \{(Dt/2)^2 - (R/2)^2\} \times \pi \times Wt,$$

and

$$R = Dt - 2H,$$

wherein all of Dt, Wt, and H are determined when the tire is mounted on a normal rim at an internal pressure equal to atmospheric pressure.

The present invention (2) relates to the tire according to the present invention (1), wherein a joint connecting the tread and the sidewall is outwardly away by more than Wt/4 (mm) from an equatorial plane of the tire in a tire width direction.
The present invention (3) relates to the tire according to the present invention (1) or (2), wherein the tread includes a tread-reinforcing layer.
The present invention (4) relates to the tire according to any one of the present inventions (1) to (3), wherein the tire includes a support on at least one of a tire inner cavity side of the tread or a tire inner cavity side of the sidewall.
The present invention (5) relates to the tire according to the present invention (4), wherein the support has a modulus of elasticity in tension of 0.1 to 13.0 GPa.
The present invention (6) relates to the tire according to any one of the present inventions (1) to (5), wherein the thermoplastic elastomer composition in the tread has a complex modulus of elasticity Et* satisfying the following relationship:

$$5.0\ MPa \leq Et* \leq 13.0\ MPa,$$

wherein Et* denotes a complex modulus of elasticity measured at a temperature of 30°C, an initial strain of 10%, a dynamic strain of 1%, and a frequency of 10 Hz in a tensile mode.
The present invention (7) relates to the tire according to any one of the present inventions (1) to (6), wherein the thermoplastic elastomer composition in the sidewall has a complex modulus of elasticity Es* satisfying the following relationship:

$$13.0 \text{ MPa} \leq \text{Es*} \leq 80.0 \text{ Mpa},$$

wherein Es* denotes a complex modulus of elasticity measured at a temperature of 30°C, an initial strain of 10%, a dynamic strain of 1%, and a frequency of 10 Hz in a tensile mode.

The present invention (8) relates to the tire according to any one of the present inventions (1) to (7), wherein the cross-sectional width Wt (mm) of the tire and the cross-sectional height H (mm) of the tire satisfy the following relationship:

$$H/Wt \times 100 \geq 45\%.$$

The present invention (9) relates to the tire according to any one of the present inventions (1) to (8), wherein the complex modulus of elasticity Et* (MPa) of the thermoplastic elastomer composition in the tread and the complex modulus of elasticity Es* (MPa) of the thermoplastic elastomer composition in the sidewall satisfy the following relationship:

$$\text{Es*}/\text{Et*} \leq 7.0,$$

wherein Et* denotes a complex modulus of elasticity measured at a temperature of 30°C, an initial strain of 10%, a dynamic strain of 1%, and a frequency of 10 Hz in a tensile mode, and Es* denotes a complex modulus of elasticity measured at a temperature of 30°C, an initial strain of 10%, a dynamic strain of 1%, and a frequency of 10 Hz in a tensile mode.

The present invention (10) relates to the tire according to any one of the present inventions (1) to (9), wherein at least one of the thermoplastic elastomer composition in the tread and the thermoplastic elastomer composition in the sidewall contains a thermoplastic elastomer and a crosslinking agent.

The present invention (11) relates to the tire according to the present invention (10), wherein the thermoplastic elastomer includes a urethane thermoplastic elastomer.

The present invention (12) relates to the tire according to the present invention (10) or (11), wherein the crosslinking agent includes an isocyanate.

The present invention (13) relates to the tire according to any one of the present inventions (10) to (12), wherein the crosslinking agent includes 4,4'-diphenylmethane diisocyanate.

The present invention (14) relates to the tire according to any one of the present inventions (3) to (13), wherein the tread-reinforcing layer contains a polyester resin.

The present invention (15) relates to the tire according to any one of the present inventions (4) to (14), wherein the support contains a polyethylene resin.

REFERENCE SIGNS LIST

2 pneumatic tire
4 tread
5 joint
6 sidewall
4a tread-reinforcing layer
8 support
11 tread surface
12 tread inner face
14 outermost face of tread crown
17 tread crown (crown center)
CL equatorial plane of tire 2
T total thickness at tread crown
T4a thickness of tread-reinforcing layer at one point on the surface thereof
W4a cross-sectional width of tread-reinforcing layer in tire width direction
T8 thickness of support at one point on the surface thereof

**Claims**

1. A tire, comprising a tread and a sidewall each comprising a thermoplastic elastomer composition,

   the tire satisfying the following relationship (1):

$$(1) \quad A \leq 3.0\%,$$

   wherein A denotes a displacement in a tire radial direction at an outermost surface of a tread crown when the tire is mounted on a normal rim and then inflated to a predetermined air pressure given below,
   a total thickness T (mm) at the tread crown and an outer diameter Dt (mm) of the tire satisfying the following relationship (2):

$$(2) \quad T/Dt \leq 0.034,$$

   <Predetermined air pressure>
   250 (kPa): for the tire with a virtual volume V of 15000 $cm^3$ or more, or
   $0.0152 \times v + 22.553$ (kPa): for the tire with a virtual volume V of less than 15000 $cm^3$,
   wherein the virtual volume V ($mm^3$) of the tire is calculated from the outer diameter Dt (mm) of the tire, a cross-sectional width Wt (mm) of the tire, a rim diameter R (mm), and a cross-sectional height H (mm) of the tire using the following formulas:

$$V = \{(Dt/2)^2 - (R/2)^2\} \times \pi \times Wt,$$

   and

$$R = Dt - 2H,$$

   wherein all of Dt, Wt, and H are determined when the tire is mounted on a normal rim at an internal pressure equal to atmospheric pressure.

2. The tire according to claim 1,
   wherein a joint connecting the tread and the sidewall is outwardly away by more than Wt/4 (mm) from an equatorial plane of the tire in a tire width direction.

3. The tire according to claim 1 or 2,
   wherein the tread includes a tread-reinforcing layer.

4. The tire according to any one of claims 1 to 3,
   wherein the tire includes a support on at least one of a tire inner cavity side of the tread or a tire inner cavity side of the sidewall.

5. The tire according to claim 4,
   wherein the support has a modulus of elasticity in tension of 0.1 to 13.0 GPa.

6. The tire according to any one of claims 1 to 5,
   wherein the thermoplastic elastomer composition in the tread has a complex modulus of elasticity Et* satisfying the following relationship:

$$5.0 \text{ MPa} \leq Et* \leq 13.0 \text{ Mpa},$$

   wherein Et* denotes a complex modulus of elasticity measured at a temperature of 30°C, an initial strain of 10%, a dynamic strain of 1%, and a frequency of 10 Hz in a tensile mode.

**7.** The tire according to any one of claims 1 to 6,
wherein the thermoplastic elastomer composition in the sidewall has a complex modulus of elasticity Es* satisfying the following relationship:

$$13.0 \text{ MPa} \leq Es* \leq 80.0 \text{ Mpa,}$$

wherein Es* denotes a complex modulus of elasticity measured at a temperature of 30°C, an initial strain of 10%, a dynamic strain of 1%, and a frequency of 10 Hz in a tensile mode.

**8.** The tire according to any one of claims 1 to 7,
wherein the cross-sectional width Wt (mm) of the tire and the cross-sectional height H (mm) of the tire satisfy the following relationship:

$$H/Wt \times 100 \geq 45\%.$$

**9.** The tire according to any one of claims 1 to 8,
wherein the complex modulus of elasticity Et* (MPa) of the thermoplastic elastomer composition in the tread and the complex modulus of elasticity Es* (MPa) of the thermoplastic elastomer composition in the sidewall satisfy the following relationship:

$$Es*/Et* \leq 7.0,$$

wherein Et* denotes a complex modulus of elasticity measured at a temperature of 30°C, an initial strain of 10%, a dynamic strain of 1%, and a frequency of 10 Hz in a tensile mode, and Es* denotes a complex modulus of elasticity measured at a temperature of 30°C, an initial strain of 10%, a dynamic strain of 1%, and a frequency of 10 Hz in a tensile mode.

FIG.1

FIG.2

Europäisches
Patentamt

European
Patent Office

Office européen
des brevets

# EUROPEAN SEARCH REPORT

**Application Number**

EP 23 15 0037

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2021/070578 A1 (SUMITOMO RUBBER IND [JP]) 15 April 2021 (2021-04-15) * abstract; figures * | 1-9 | INV. B60C3/04 B60C5/01 B60C11/00 B60C13/00 |
| X | EP 2 399 761 A1 (BRIDGESTONE CORP [JP]) 28 December 2011 (2011-12-28) * paragraph [0004] – paragraph [0006] * * paragraph [0018] * * paragraph [0031] – paragraph [0034] * * paragraph [0038] – paragraph [0051] * * paragraph [0057] – paragraph [0058] * * figures * | 1-5,8 | |
| A | EP 3 069 899 A1 (SUMITOMO RUBBER IND [JP]) 21 September 2016 (2016-09-21) * abstract * * paragraph [0060] – paragraph [0062] * * figures * | 1 | |

**TECHNICAL FIELDS SEARCHED (IPC)**

B60C

The present search report has been drawn up for all claims

| Place of search | Date of completion of the search | Examiner |
|---|---|---|
| Munich | 10 July 2023 | Avisse, Marylène |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 15 0037

This annex lists the patent family members relating to the patent documents cited in the above-mentioned European search report.
The members are as contained in the European Patent Office EDP file on
The European Patent Office is in no way liable for these particulars which are merely given for the purpose of information.

10-07-2023

| Patent document cited in search report | | Publication date | Patent family member(s) | | Publication date |
|---|---|---|---|---|---|
| WO 2021070578 | A1 | 15-04-2021 | CN | 113543987 A | 22-10-2021 |
| | | | EP | 4043237 A1 | 17-08-2022 |
| | | | JP | 6943275 B2 | 29-09-2021 |
| | | | JP | 2021062654 A | 22-04-2021 |
| | | | US | 2022371374 A1 | 24-11-2022 |
| | | | WO | 2021070578 A1 | 15-04-2021 |
| EP 2399761 | A1 | 28-12-2011 | CN | 102317089 A | 11-01-2012 |
| | | | EP | 2399761 A1 | 28-12-2011 |
| | | | JP | 5485255 B2 | 07-05-2014 |
| | | | JP | WO2010095688 A1 | 30-08-2012 |
| | | | KR | 20110117708 A | 27-10-2011 |
| | | | US | 2011297283 A1 | 08-12-2011 |
| | | | WO | 2010095688 A1 | 26-08-2010 |
| EP 3069899 | A1 | 21-09-2016 | CN | 105984281 A | 05-10-2016 |
| | | | EP | 3069899 A1 | 21-09-2016 |
| | | | JP | 6405273 B2 | 17-10-2018 |
| | | | JP | 2016172540 A | 29-09-2016 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4414370 A
- JP S596207 A
- JP H558005 B
- JP H1313522 A
- US 5010166 A

**Non-patent literature cited in the description**

- TREND. Toagosei Co., Ltd, 2000, vol. 3, 42-45